# EUROPEAN PATENT APPLICATION

(11) **EP 4 738 747 A1**
(43) Date of publication of application: **06.05.2026**
(21) Application number: 23942817.0
(22) Date of filing: 28.06.2023
(51) Int. Cl.: H04L 5/00

(54) **CSI FEEDBACK DETERMINATION METHOD AND APPARATUS, DEVICE, SYSTEM AND STORAGE MEDIUM**

(71) Applicant: Beijing Xiaomi Mobile Software Co., Ltd., Beijing 100085 (CN)
(72) Inventor: LIU, Zhengxuan, Beijing 100085 (CN)
(74) Representative: Dehns Germany Partnerschaft mbB
(86) International application number: PCT/CN2023/103479
(87) International publication number: WO 2025/000300

(57) **Abstract**

The present disclosure relates to a channel status information (CSI) feedback determination method and apparatus, a device, a system and a storage medium. The method comprises: a network device receiving first instruction information sent by a terminal device; determining a CSI feedback mode of the terminal device on the basis of the first instruction information, wherein the CSI feedback mode comprises a first feedback mode and/or a second feedback mode, the first feedback mode is used for instructing the terminal device to perform CSI feedback on the basis of codebook configuration information configured by the network device, and the second feedback mode is used for instructing the terminal device to perform CSI feedback on the basis of a pre-activated first CSI model. In this way, the accuracy of CSI feedback can be ensured, and the system performance loss can be reduced.

## Description

### TECHNICAL FIELD

The present disclosure relates to the communication technical field, and more specifically, to a CSI feedback determination method and apparatus, a device, a system, and a storage medium.

### BACKGROUND

The 3rd Generation Partnership Project (3GPP) standardization already includes a codebook-based CSI feedback method, and researches are currently conducted on implementing Channel Status Information (CSI) compression feedback and restoration using a two-sided model based on Artificial Intelligence (Al) or Machine Learning (ML).

Since the data transmission performance mainly depends on feedback of CSI information, how to determine a specific scheme for CSI feedback to ensure accuracy of the CSI feedback is a crucial problem that urgently needs to be addressed.

### SUMMARY

Embodiments of the present disclosure provide a CSI feedback determination method and apparatus, a device, a system, and a storage medium.

According to a first aspect of an embodiment of the present disclosure, a Channel Status Information (CSI) feedback determination method is provided. The method includes:
receiving, by a network device, first indication information sent from a terminal device; and
based on the first indication information, determining a CSI feedback scheme of the terminal device, wherein the CSI feedback scheme includes a first feedback scheme and/or a second feedback scheme, the first feedback scheme is used to indicate the terminal device to perform CSI feedback based on codebook configuration information configured by the network device, and the second feedback scheme is used to indicate the terminal device to perform the CSI feedback based on a pre-activated first CSI model.

In some embodiments, determining the CSI feedback scheme of the terminal device based on the first indication information includes:
based on the first indication information, determining a first performance indicator and a second performance indicator, wherein the first performance indicator is a performance indicator when the CSI feedback is performed using the first feedback scheme, and the second performance indicator is a performance indicator when the CSI feedback is performed using the second feedback scheme; and
determining the CSI feedback scheme based on the first performance indicator and the second performance indicator.

In some embodiments, the first indication information includes first CSI information and second CSI information, the first CSI information is CSI information when the CSI feedback is performed based on the codebook configuration information, the second CSI information is initial CSI information input to the first CSI model, the first performance indicator is obtained by performing a performance indicator calculation based on the first CSI information and the second CSI information, the second performance indicator is obtained by performing a performance indicator calculation based on obtained third CSI information and the second CSI information, and the third CSI information is CSI information output after restoring CSI information output by the first CSI model through a CSI restoration model deployed in the network device.

In some embodiments, the first indication information includes first CSI information, second CSI information and third CSI information, the first CSI information is CSI information when the CSI feedback is performed based on the codebook configuration information, the second CSI information is initial CSI information input to the first CSI model, the third CSI information is CSI information output by the first CSI model, the first performance indicator is obtained by performing a performance indicator calculation based on the first CSI information and the second CSI information, and the second performance indicator is obtained by performing a performance indicator calculation based on the third CSI information and the second CSI information.

In some embodiments, the first indication information includes the first performance indicator and the second performance indicator.

In some embodiments, determining the CSI feedback scheme based on the first performance indicator and the second performance indicator includes:
when the first performance indicator is smaller than or equal to the second performance indicator, determining that the CSI feedback scheme is the second feedback scheme; or
when the first performance indicator is greater than or equal to the second performance indicator, determining that the CSI feedback scheme is the first feedback scheme.

In some embodiments, when there are S first performance indicators and S second performance indicators, S being a positive integer greater than 1, determining the CSI feedback scheme based on the first performance indicator and the second performance indicator further includes:
when a first number is greater than or equal to a preset first number, determining that the CSI feedback scheme is the second feedback scheme, wherein the first number is the number of cases, among the S first performance indicators and the S second performance indicators, that meet the first performance indicator being smaller than or equal to the second performance indicator; or
when a second number is greater than or equal to a preset second number, determining that the CSI feedback scheme is the first feedback scheme, wherein the second number is the number of cases, among the S first performance indicators and the S second performance indicators, that meet the first performance indicator being greater than or equal to the second performance indicator.

In some embodiments, the first indication information includes first CSI information or third CSI information, the first CSI information is CSI information when the CSI feedback is performed based on the codebook configuration information, and the third CSI information is CSI information output by the first CSI model; determining the CSI feedback scheme of the terminal device based on the first indication information includes:
when the first indication information includes the first CSI information, determining that the CSI feedback scheme is the first feedback scheme; or
when the first indication information includes the third CSI information, determining that the CSI feedback scheme is the second feedback scheme.

In some embodiments, the first indication information includes a recommended feedback scheme of the terminal device; determining the CSI feedback scheme based on the first indication information includes:
based on the recommended feedback scheme, determining the CSI feedback scheme, wherein the CSI feedback scheme is the recommended feedback scheme, or the CSI feedback scheme is a feedback scheme in the first feedback scheme and the second feedback scheme that is different from the recommended feedback scheme.

In some embodiments, before receiving the first indication information sent from the terminal device, the method further includes:
sending second indication information to the terminal device, wherein the second indication information is used to indicate target configuration information that is configured by the network device for the terminal device, and the target configuration information includes at least the codebook configuration information, so that the terminal device performs the CSI feedback based on the codebook configuration information when the first feedback scheme is used.

In some embodiments, sending the second indication information to the terminal device includes:
receiving first request information sent from the terminal device, wherein the first request information is used to request information configuration for the terminal device; and
based on the first request information, sending the second indication information to the terminal device.

In some embodiments, when a CSI feedback payload and/or an uplink transmission resource configured by the network device changes, sending the second indication information to the terminal device includes:
based on a changed CSI feedback payload and/or uplink transmission resource, sending the second indication information to the terminal device.

In some embodiments, the target configuration information further includes parameter configuration information, the parameter configuration information is used to determine the first CSI model, and the parameter configuration information includes at least one of: a CSI feedback payload, an uplink transmission resource, the number of subbands, a carrier size, or the number of transmission ports for a reference signal.

In some embodiments, the method further includes:
sending third indication information to the terminal device, wherein the third indication information is used to indicate to activate the first CSI model that is pre-deployed in the terminal device.

In some embodiments, sending the third indication information to the terminal device includes:
receiving second request information sent from the terminal device, wherein the second request information is used to request activation of the first CSI model; and
based on the second request information, sending the third indication information to the terminal device.

In some embodiments, N CSI generation models are deployed in the terminal device, where N is a positive integer, and the first CSI model is one of N CSI generation models.

In some embodiments, when N is equal to 1, a length of CSI information output by the CSI generation model is within a preset first range.

In some embodiments, when N is a positive integer greater than 1, a length of CSI information output by each of the CSI generation models is fixed or within a preset second range. The first CSI model is a CSI generation model among the N CSI generation models that meets a preset first condition; the preset first condition includes: a CSI generation model with the largest second performance indicator among second performance indicators respectively corresponding to M₁ CSI generation models, or a CSI generation model with the smallest absolute value of a difference between a CSI information payload output by the CSI generation model and a first feedback payload among abstract values of differences between CSI information payloads respectively output by N CSI generation models and the first feedback payload, where M₁ is a positive integer smaller than or equal to N, the first feedback payload is a feedback payload when the CSI feedback is performed using the first feedback scheme, and the second performance indicator is a performance indicator when the CSI feedback is performed based on the CSI generation model.

In some embodiments, when M₁ is smaller than N, the M₁ CSI generation models are CSI generation models selected from the N CSI generation models that match preset selection information, wherein the preset selection information includes a channel environment between the terminal device and the network device, and/or parameter configuration information configured by the network device.

In some embodiments, when multiple same CSI information payloads exist, the first CSI model is a CSI generation model, determined from CSI generation models corresponding to the multiple same CSI information payloads, that matches the preset selection information, wherein the preset selection information includes the channel environment between the terminal device and the network device, and/or the parameter configuration information configured by the network device.

In some embodiments, N two-sided models are deployed in the terminal device, the two-sided model includes a CSI generation model and a CSI restoration model, where N is a positive integer, and the first CSI model is one of the N two-sided models.

In some embodiments, when N is equal to 1, a length of CSI information output by the CSI generation model is within a preset first range.

In some embodiments, when N is a positive integer greater than 1, a length of CSI information output by each of the CSI generation models is fixed or within a preset second range. The first CSI model is a two-sided model among the N two-sided models that matches preset selection information, the preset selection information includes a channel environment between the terminal device and the network device, and/or parameter configuration information configured by the network device.

In some embodiments, when M₂ matching two-sided models exist, the first CSI model is a two-sided model with the largest second performance indicator among second performance indicators respectively corresponding to the M₂ two-sided models, M₂ is a positive integer smaller than or equal to N, and the second performance indicator is a performance indicator when the CSI feedback is performed using a two-sided model indicated by the second feedback scheme.

In some embodiments, when a CSI generation model is deployed in the terminal device, the third indication information is further used to indicate that CSI information payload output by the CSI generation model is equal to a first feedback payload, or to indicate that an absolute value of a difference between the CSI information payload output by the CSI generation model and the first feedback payload is smaller than a preset first threshold, wherein the first feedback payload is a feedback payload when the CSI feedback is performed using the first feedback scheme.

In some embodiments, when a CSI generation model is deployed in the terminal device and an uplink transmission resource of the terminal device is reduced, if the first indication information includes first CSI information and third CSI information, the first CSI information is remaining CSI information after performing omission, based on a preset CSI omission criterion, on CSI information obtained when the CSI feedback is performed using the first feedback scheme, and the third CSI information is remaining CSI information after performing omission, based on a preset CSI omission criterion, on CSI information output by the CSI generation model.

In some embodiments, the first indication information includes third CSI information or second performance indicators respectively corresponding to M₃ CSI generation models, wherein the third CSI information is CSI information output by a CSI restoration model deployed in the network device, the second performance indicator is a performance indicator when the CSI feedback is performed based on the CSI generation model, and M₃ is a positive integer smaller than or equal to N.

In some embodiments, the first indication information includes third CSI information or second performance indicators respectively corresponding to M₃ two-sided models, wherein M₃ is a positive integer smaller than or equal to N; if a CSI restoration model deployed in the terminal device is the same as a CSI restoration model deployed in the network device, the third CSI information is CSI information output by the CSI restoration model deployed in the network device, or the third CSI information is CSI information output by the CSI restoration model deployed in the terminal device; if the CSI restoration model deployed in the terminal device is different from the CSI restoration model deployed in the network device, the third CSI information is the CSI information output by the CSI restoration model deployed in the terminal device; the second performance indicator is a performance indicator when the CSI feedback is performed based on the two-sided model.

In some embodiments, when a CSI feedback payload and/or an uplink transmission resource configured by the network device changes, N being a positive integer greater than 1, the method further includes:

sending fourth indication information to the terminal device, wherein the fourth indication information is used to indicate the terminal device to switch from the first CSI model to a second CSI model, and the second CSI model is a model deployed in the terminal device that matches the changed CSI feedback payload and/or the uplink transmission resource.

In some embodiments, sending the fourth indication information to the terminal device includes:
receiving third request information sent from the terminal device, wherein the third request information is sent from the terminal device when the terminal device monitors a change in the CSI feedback payload and/or the uplink transmission resource configured by the network device, and is used to request model switching for the first CSI model; and
based on the third request information, sending the fourth indication information to the terminal device.

In some embodiments, sending the fourth indication information to the terminal device includes:
when a change in the CSI feedback payload and/or the uplink transmission resource configured by the network device is monitored, sending the fourth indication information to the terminal device.

In some embodiments, the fourth indication information is further used to indicate to deactivate the first CSI model.

In some embodiments, the method further includes:
sending fifth indication information to the terminal device, wherein the fifth indication information is used to indicate retraining of a two-sided model deployed between the terminal device and the network device, and the two-sided model includes at least the first CSI model deployed in the terminal device.

In some embodiments, sending the fifth indication information to the terminal device includes:
sending the fifth indication information to the terminal device when at least one of the following information is monitored: a change in a channel environment between the terminal device and the network device, a change in a data distribution of the two-sided model, or an absolute value of a difference between a first performance indicator and a second performance indicator being greater than a preset second threshold;
wherein the first performance indicator is a performance indicator when the CSI feedback is performed using the first feedback scheme, and the second performance indicator is a performance indicator when the CSI feedback is performed using the second feedback scheme.

In some embodiments, sending the fifth indication information to the terminal device includes:
receiving fourth request information sent from the terminal device, wherein the fourth request information is used to request retraining of the two-sided model deployed between the terminal device and the network device; and
based on the third request information, sending the fifth indication information to the terminal device.

In some embodiments, the method further includes:
sending sixth indication information to the terminal device, wherein the sixth indication information includes the CSI feedback scheme to cause the terminal device to perform the CSI feedback based on the CSI feedback scheme.

In some embodiments, the terminal device adopts the second feedback scheme for CSI feedback before sending the first indication information. If the determined CSI feedback scheme is the first feedback scheme, the sixth indication information is used to indicate the terminal device to fall back from the second feedback scheme to the first feedback scheme, so as to perform the CSI feedback using the first feedback scheme.

In some embodiments, the sixth indication information is further used to indicate to deactivate the first CSI model.

According to a second aspect of an embodiment of the present disclosure, a wave Channel Status Information (CSI) feedback determination method is provided. The method includes:
sending, by a terminal device, first indication information to a network device, wherein the first indication information is used for the network device to determine a CSI feedback scheme used by the terminal device when the terminal device performs CSI feedback to the network device, the CSI feedback scheme includes a first feedback scheme and/or a second feedback scheme, the first feedback scheme is used to indicate the terminal device to perform the CSI feedback based on codebook configuration information configured by the network device, and the second feedback scheme is used to indicate the terminal device to perform the CSI feedback based on a pre-activated first CSI model.

In some embodiments, the first indication information includes first CSI information and second CSI information, the first CSI information is CSI information when the CSI feedback is performed based on the codebook configuration information, and the second CSI information is initial CSI information input to the first CSI model.

In some embodiments, the first indication information includes first CSI information, second CSI information and third CSI information, the first CSI information is CSI information when the CSI feedback is performed based on the codebook configuration information, the second CSI information is initial CSI information input to the first CSI model, and the third CSI information is CSI information output by the first CSI model.

In some embodiments, the first indication information includes a first performance indicator and a second performance indicator, the first performance indicator is a performance indicator when the CSI feedback is performed using the first feedback scheme, and the second performance indicator is a performance indicator when the CSI feedback is performed using the second feedback scheme.

In some embodiments, the first indication information includes first CSI information or third CSI information, the first CSI information is CSI information when the CSI feedback is performed based on the codebook configuration information, and the third CSI information is CSI information output by the first CSI model.

In some embodiments, the first indication information includes a recommended feedback scheme of the terminal device.

In some embodiments, the method further includes:
receiving second indication information sent from the network device, wherein the second indication information is used to indicate target configuration information that is configured by the network device for the terminal device, and the target configuration information includes at least the codebook configuration information.

In some embodiments, the method further includes:
receiving third indication information sent from the network device, wherein the third indication information is used to indicate to activate the first CSI model which is pre-deployed in the terminal device; and
based on the third indication information, activating the first CSI model.

In some embodiments, a CSI generation model is deployed in the terminal device, a length of CSI information output by the CSI generation model is within a preset first range, and the first CSI model is the CSI generation model.

In some embodiments, N CSI generation models are deployed in the terminal device, where N is a positive integer greater than 1, a length of CSI information output by each of the CSI generation models is fixed or within a preset second range, and the first CSI model is a CSI generation model among the N CSI generation models that meets a preset first condition; the preset first condition includes: a CSI generation model with the largest second performance indicator among second performance indicators respectively corresponding to M₁ CSI generation models, or a CSI generation model with the smallest absolute value of a difference between a CSI information payload output by the CSI generation model and a first feedback payload among abstract values of differences between CSI information payloads respectively output by N CSI generation models and the first feedback payload, where M₁ is a positive integer smaller than or equal to N, the first feedback payload is a feedback payload when the CSI feedback is performed using the first feedback scheme, and the second performance indicator is a performance indicator when the CSI feedback is performed based on the CSI generation model.

In some embodiments, a two-sided model is deployed in the terminal device, the two-sided model includes a CSI generation model and a CSI restoration model, a length of CSI information output by the CSI generation model is within a preset first range, and the first CSI model is the two-sided model.

In some embodiments, N two-sided models are deployed in the terminal device, the two-sided model includes a CSI generation model and a CSI restoration model, where N is a positive integer greater than 1, a length of CSI information output by each of the CSI generation models is fixed or within a preset second range, the first CSI model is a two-sided model among the N two-sided models that matches preset selection information, the preset selection information includes a channel environment between the terminal device and the network device, and/or parameter configuration information configured by the network device.

In some embodiments, when a CSI feedback payload and/or an uplink transmission resource configured by the network device changes, N being a positive integer greater than 1, the method further includes:
receiving fourth indication information sent from the network device, wherein the fourth indication information is used to indicate the terminal device to switch from the first CSI model to a second CSI model, the second CSI model is a model deployed in the terminal device that matches the changed CSI feedback payload and/or the uplink transmission resource; and
based on the fourth indication information, switching from the first CSI model to the second CSI model.

In some embodiments, the method further includes:
receiving fifth indication information sent from the network device, wherein the fifth indication information is used to indicate retraining of a two-sided model deployed between the terminal device and the network device, and the two-sided model includes at least the first CSI model deployed in the terminal device; and
based on the fifth indication information, retraining the two-sided model deployed between the terminal device and the network device.

In some embodiments, the method further includes:
receiving sixth indication information sent from the network device, wherein the sixth indication information includes the CSI feedback scheme; and
performing the CSI feedback based on the CSI feedback scheme in the sixth indication information.

In some embodiments, the CSI feedback scheme is the second feedback scheme, and performing the CSI feedback based on the CSI feedback scheme in the sixth indication information includes:
feeding CSI information output by the first CSI model in the terminal device back to the network device.

In some embodiments, the terminal device adopts the second feedback scheme for CSI feedback before sending the first indication information. If the CSI feedback scheme is the first feedback scheme, the sixth indication information is used to indicate the terminal device to fall back from the second feedback scheme to the first feedback scheme, so as to perform the CSI feedback using the first feedback scheme. Performing the CSI feedback based on the CSI feedback scheme in the sixth indication information includes:
based on the sixth indication information, falling back from the second feedback scheme to the first feedback scheme, and performing the CSI feedback using the first feedback scheme.

In some embodiments, the sixth indication information is further used to indicate to deactivate the first CSI model. The method further includes:
based on the sixth indication information, deactivating the first CSI model.

For the content that is not introduced or described in the embodiments of the present disclosure, reference may be made to relevant descriptions in the embodiments set forth in the aforementioned first aspect, and repeated descriptions are omitted here.

According to a third aspect of an embodiment of the present disclosure, a network device is provided. The device includes:
a communication module configured to receive first indication information sent from a terminal device; and
a processing module configured to determine a CSI feedback scheme based on the first indication information, wherein the CSI feedback scheme includes a first feedback scheme and/or a second feedback scheme, the first feedback scheme is used to indicate the terminal device to perform CSI feedback based on codebook configuration information configured by the network device, and the second feedback scheme is used to indicate the terminal device to perform the CSI feedback based on a pre-activated first CSI model.

According to a fourth aspect of an embodiment of the present disclosure, a terminal device is provided. The device includes:
a communication module configured to send first indication information to a network device, wherein the first indication information is used for the network device to determine a CSI feedback scheme used by the terminal device when the terminal device performs CSI feedback to the network device, the CSI feedback scheme includes a first feedback scheme and/or a second feedback scheme, the first feedback scheme is used to indicate the terminal device to perform the CSI feedback based on the codebook configuration information configured by the network device, and the second feedback scheme is used to indicate the terminal device to perform the CSI feedback based on a pre-activated first CSI model.

According to a fifth aspect of an embodiment of the present disclosure, a communication apparatus is provided. The apparatus includes:
a processor; and
a memory configured to store instructions executable by the processor;
the processor is configured to perform steps of the method provided in the first aspect of the present disclosure.

According to a sixth aspect of an embodiment of the present disclosure, a communication apparatus is provided. The apparatus includes:
a processor; and
a memory configured to store instructions executable by the processor;
the processor is configured to perform steps of the method provided in the second aspect of the present disclosure.

According to a seventh aspect of an embodiment of the present disclosure, a computer-readable storage medium is provided. Computer program instructions are stored on the computer-readable storage medium. When the computer program instructions are executed by a processor, steps of the method provided in the first aspect of the present disclosure are implemented.

According to an eighth aspect of an embodiment of the present disclosure, a computer-readable storage medium is provided. Computer program instructions are stored on the computer-readable storage medium. When the computer program instructions are executed by a processor, steps of the method provided in the second aspect of the present disclosure are implemented.

According to a ninth aspect of an embodiment of the present disclosure, a communication system is provided. The system includes:
a network device that can perform the method provided in the first aspect of the present disclosure; and
a terminal device that can perform the method provided in the second aspect of the present disclosure.

The technical solutions provided by the embodiments of the present disclosure can include the following beneficial effects. The network device receives the first indication information sent from the terminal device. The first indication information is used to determine the CSI feedback scheme used by the terminal device when the terminal device performs the CSI feedback to the network device. Based on the first indication information, the network device determines the CSI feedback scheme of the terminal device. The CSI feedback scheme includes the first feedback scheme and/or the second feedback scheme. The first feedback scheme is used to indicate the terminal device to perform the CSI feedback based on the codebook configuration information configured by the network device. The second feedback scheme is used to indicate the terminal device to perform the CSI feedback based on the pre-activated first CSI model. Therefore, the network device can select a more suitable CSI feedback scheme for the terminal device to perform the CSI feedback based on the first indication information sent from the terminal device, to ensure the accuracy of the CSI feedback, reduce system performance loss, and thus improve the accuracy of the CSI feedback and the performance of data transmission.

It should be understood that the above general description and the following detailed description are illustrative and explanatory only, and are not intended to limit the present disclosure.

### BRIEF DESCRIPTION OF THE DRAWINGS

The drawings, which are incorporated in and form a part of the specification, illustrate embodiments consistent with the present disclosure and, together with the specification, serve to explain principles of the present disclosure.
FIG. 1 is a schematic diagram of the structure of a communication system according to an example embodiment.
FIG. 2 is a schematic diagram of the structure of another communication system according to an example embodiment.
FIG. 3(a) is a schematic diagram of an application scenario according to an example embodiment.
FIG. 3(b) is a schematic diagram of another application scenario according to an example embodiment.
FIG. 4 is a schematic diagram of the structure of a terminal device according to an example embodiment.
FIG. 5 is a schematic flowchart of a Channel Status Information (CSI) feedback determination method according to an example embodiment.
FIG. 6 is a schematic flowchart of another Channel Status Information (CSI) feedback determination method according to an example embodiment.
FIG. 7 is a schematic flowchart of another Channel Status Information (CSI) feedback determination method according to an example embodiment.
FIG. 8 is a schematic flowchart of model switching according to an example embodiment.
FIG. 9 is a schematic flowchart of model training according to an example embodiment.
FIG. 10 is a schematic flowchart of CSI feedback according to an example embodiment.
FIG. 11 is a schematic diagram of the structure of a Channel Status Information (CSI) feedback determination apparatus according to an example embodiment.
FIG. 12 is a schematic diagram of the structure of another Channel Status Information (CSI) feedback determination apparatus according to an example embodiment.
FIG. 13 is a schematic diagram of the structure of a communication apparatus according to an example embodiment.

### DETAILED DESCRIPTION

Example embodiments will now be described in detail, examples of which are illustrated in the accompanying drawings. When the following description mentions the drawings, unless otherwise indicated, the same numerals in different drawings denote the same or similar elements. The implementations described in the following example embodiments do not represent all implementations consistent with the present disclosure. Rather, they are merely examples of apparatuses and methods consistent with some aspects of the present disclosure as detailed in the appended claims.

In the description of the embodiments of the present disclosure, terms such as "first" and "second", etc. are used to distinguish similar objects and are not necessarily to be construed as a specific order or sequence. Furthermore, unless otherwise stated, in the description with reference to the accompanying drawings, the same reference numerals in different drawings denote the same elements.

In the description of embodiments of the present disclosure, unless otherwise stated, "multiple" means two or more, and other quantifiers are similar. The expressions such as "at least one (item)", "one or more (item)" or similar expressions refer to any combination of these items, including any combination of single item or multiple items. For example, "at least one" may represent any number. As another example, "one or more of a, b and c" may represent: a, b, c, a-b, a-c, b-c, or a-b-c, where a, b, c may be single or multiple. The expression "and/or" describes an association relationship between related objects, indicating that three relationships may exist. For example, A and/or B may represent: A alone, A and B simultaneously, and B alone, where A, B may be singular or multiple. The character "/" indicates that related objects before and after the character are in an "or" relationship. The singular forms "a", "an", "one", "the", "said", "the above-mentioned", and "the foregoing" are also intended to include plural forms unless the context clearly indicates otherwise.

In the description of the embodiments of the present disclosure, the expression such as "A in one case, B in another case" or "A in response to one case, B in response to another case B", etc. may include the following technical solutions depending on the situation: A is executed independent of B, i.e., A is executed in some embodiments; B is executed independent of A, i.e., B is executed in some embodiments; A and B are selectively executed, i.e., selective execution of A and B is performed in some embodiments; A and B are both executed, i.e., A and B are executed in some embodiments. The same applies when there are more branches such as A, B, and C.

In the description of the embodiments disclosed herein, "including A", "containing A", "indicating A", and "carrying A" may be interpreted as directly carrying A or indirectly indicating A.

In the description of the embodiments of the present disclosure, terms such as "in response to...", "in response to determining...", "in a situation that...", "when...", "at the time of...", "if...", "in a case that..." etc. may be used interchangeably.

In some embodiments, terms such as "greater than", "greater than or equal to", "above", "higher than", and "not less than" etc. may be used interchangeably, and terms such as "smaller than", "smaller than or equal to", "below", "lower than", and "not greater than" etc. may be used interchangeably.

In some embodiments, the terms "network element", "node", "function", "apparatus", "device", "system", "chip", "chip system" etc., may be used interchangeably.

Furthermore, each element, each row, or each column in a table in embodiments of the present disclosure may be implemented as an independent embodiment, and a combination of any element, any row, or any column may also be implemented as an independent embodiment.

Although operations or steps are described in a specific order in the embodiments or drawings of the present disclosure, it should not be construed as requiring these operations or steps to be performed in the specific order or serial order shown, or requiring all of the shown operations or steps to be performed to obtain a desired result. In the embodiments of the present disclosure, these operations or steps may be performed in any order if no contradiction exists; these operations or steps may be performed in parallel; a part of these operations or steps may be performed; operations or steps in multiple embodiments or drawings may be arbitrarily combined, and embodiments of the present disclosure do not impose limitations on this.

It should be noted that the embodiments in the present disclosure are not exhaustive, but merely illustrative of a part of embodiments, and are not intended to limit the scope of protection of the present disclosure. Each step in a certain embodiment may be implemented as an independent embodiment, and the steps may be arbitrarily combined, if no contradiction exists. For example, a solution after removing a part of steps in a certain embodiment may also be implemented as an independent embodiment, and the order of steps in a certain embodiment may be arbitrarily interchanged. Furthermore, optional implementations in a certain embodiment may be arbitrarily combined; moreover, the embodiments may be arbitrarily combined, for example, a part or all of steps in different embodiments may be arbitrarily combined, and a certain embodiment may be arbitrarily combined with optional implementations of other embodiments.

First, some system embodiments to which the present disclosure applies are introduced.

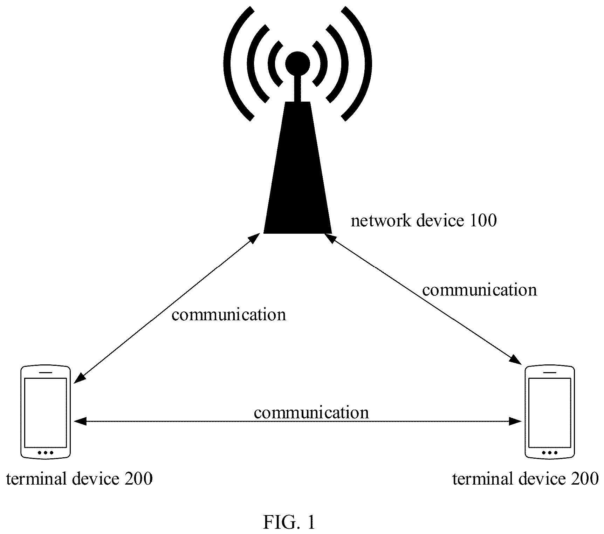

FIG. 1 is a schematic diagram of the structure of a communication system according to an example embodiment. The communication system shown in FIG. 1 includes network device(s) 100 and terminal device(s) 200. The present disclosure does not limit the number of network device(s) 100 and the number of terminal device(s) 200, and the figure shows one network device 100 and two terminal devices 200 as an example, but this does not constitute a limitation. Any two terminal devices 200 in the present disclosure may communicate with each other through a network, and network device 100 and terminal devices 200 may also communicate with each other through the network, and the present disclosure does not impose limitations on this. A data transmission from the network device 100 to the terminal device(s) 200 is called a downlink data transmission, and a data transmission from the terminal device(s) 200 to the network device 100 is called an uplink data transmission.

The system in the present disclosure may be applied to various communication systems, such as a 5th generation (5G) system or New Radio (NR), a Long Term Evolution (LTE) system, an LTE Frequency Division Duplex (FDD) system, an LTE Time Division Duplex (TDD) system, and future communication systems, including but not limited to, for example, a 6th generation mobile communication system and a satellite communication system, etc.

The network device 100 in the present disclosure may be: a base station, an evolved node base station (evolved node B, eNB), a home base station, an Access Point (AP) in a Wireless Fidelity (WiFi) system, a wireless relay node, a wireless backhaul node, a Transmission Point (TP), or a Transmission and Reception Point (TRP); the network device 100 may also be a gNB in an NR system; or, network device 100 may be a component or a part of a device constituting a base station, such as a Central Unit (CU), a Distributed Unit (DU), or a Baseband Unit (BBU), etc.

The terminal device 200 in the present disclosure may be fixed or mobile. FIG. 1 is for illustrative purposes only, and the system may also include other network devices, such as a wireless relay device and a wireless backhaul device, which are not shown in FIG. 1. The embodiments of the present disclosure do not limit the types and numbers of network device(s) and terminal device(s) included in the system.

The terminal device 200 may also be called a terminal, User Equipment (UE), Mobile Station (MS), Mobile Terminal (MT), etc.

The terminal device 200 in the embodiments of the present disclosure may be a mobile phone, a pad computer, a computer with a wireless transceiving function; or, the terminal device 200 may be a wireless terminal used in scenarios such as Virtual Reality (VR), Augmented Reality (AR), industrial control, self-driving, remote medical, smart grid, transportation safety, smart city, and smart home, etc. In the present disclosure, the aforementioned terminal devices and a chip applicable to them are collectively referred to as terminal devices. It should be understood that embodiments of the present disclosure do not limit the specific technology or device form of the terminal device 200.

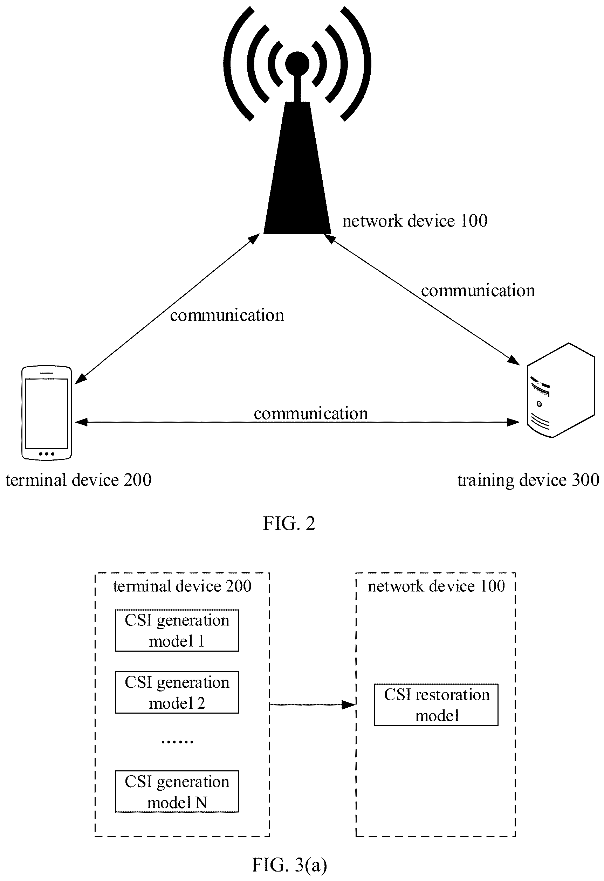

FIG. 2 is a schematic diagram of the structure of another communication system according to an example embodiment. The communication system shown in FIG. 2 includes: a network device 100, a terminal device 200, and a training device 300. For the descriptions of the network device 100 and the terminal device 200, reference may be made to the relevant descriptions in the embodiments described in FIG. 1 above, and repeated descriptions will be omitted here. The present disclosure does not limit the number of the training device(s) 300, and the number of the training device(s) may be determined according to actual situations. The present disclosure uses one training device 300 as an example, but this does not constitute a limitation. The training device 300 of the present disclosure may be the network device 100, or may be the terminal device 200, or may be other device(s) (e.g., a server or a cloud device) different from the network device 100 or the terminal device 200, etc., and the present disclosure does not limit this.

The training device 300 is used to obtain a training sample set (also known as training data), and to obtain a target model by performing training based on the training data. The target model is a two-sided model described in the embodiments below, or a part of sub-modules constituting the two-sided model, such as a CSI generation model or a CSI restoration model, etc. The two-sided model involved in the present disclosure refers to an AI/ML model including a CSI generation model and a CSI restoration model. The training data involved in the present disclosure includes a series of real CSI information between the network device 100 and the terminal device 200, and restored CSI information corresponding to all or part of the real CSI information. The restored CSI information is CSI information restored by the network device 100 based on compressed CSI information sent from the terminal device 200. The CSI information involved in the present disclosure may refer to CSI information obtained by the terminal device 200 through measurement of a reference signal (e.g., a Channel Status Information-Reference Signal, CSI-RS). This information may include, but is not limited to: downlink channel information between the network device 100 and the terminal device 200, Channel Quality Indication (CQI), or other information used to describe channel quality, etc.

The present disclosure does not limit the implementation of obtaining the above-mentioned training data. For example, the training data may be obtained by a data collection device or may be received from other devices (such as a server or other terminals), etc. Regarding the implementation of how the training device 300 performs training to obtain the above-mentioned target model, the present disclosure does not impose further limitations or descriptions. In practical applications, the target model obtained by the training device 300 through training may be applied to different systems or devices. For example, the target model may be applied/deployed in the network device 100, or may be applied/deployed in the terminal device 200, or may be applied/deployed in a server or a cloud device, etc., depending on actual application requirements, and the present disclosure does not limit it.

Based on the foregoing embodiments, several possible application scenario embodiments of the present disclosure are described below.

FIG. 3(a) is a schematic diagram of an application scenario according to an example embodiment. As shown in FIG. 3(a), N CSI generation models are deployed in the terminal device 200, and at least one CSI restoration model is deployed in the network device 100. The present disclosure does not limit the number of the CSI generation model(s), and this figure shows one CSI restoration model as an example, but this does not constitute a limitation. Typically, CSI generation model(s) and CSI restoration model(s) may be deployed in pairs, that is, N CSI restoration models may also be deployed in the network device 100. Alternatively, considering resource conservation, one CSI restoration model may be deployed in the network device 100. The present disclosure does not limit the value of N, it may be determined according to actual conditions, and typically N is a positive integer greater than or equal to 1.

In practical applications, the terminal device 200 may select one CSI generation model from the N CSI generation models as a first CSI model, and further use the first CSI model for CSI feedback. The implementations for selecting the first CSI model will be described in detail below and will not be described here. During implementation, the terminal device 200 uses the first CSI model to perform compression and quantization, etc. on its input initial CSI information to obtain corresponding processed CSI information. Typically, the processed CSI information is mathematically represented as a binary bit stream. Further, the terminal device 200 may send the processed CSI information processed by the first CSI model to the network device 100. Correspondingly, the network device 100 receives the processed CSI information.

The network device 100 may select one CSI restoration model from the at least one CSI restoration model as a decoding model, and further use the decoding model to perform CSI restoration. Typically, the decoding model is a CSI restoration model deployed in pair with the first CSI model. During implementation, the network device 100 uses the decoding model to decode and restore the processed CSI information to obtain restored CSI information. Typically, the restored CSI information is quite similar to the initial CSI information.

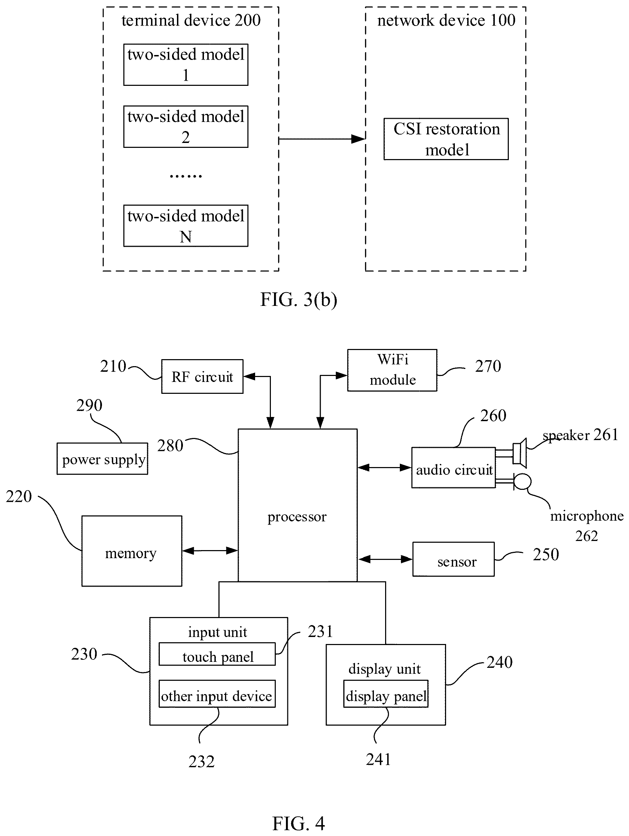

FIG. 3(b) is a schematic diagram of another application scenario according to an example embodiment. As shown in FIG. 3(b), N two-sided models are deployed in the terminal device 200. A two-sided model includes a CSI generation model and a CSI restoration model deployed in pair. At least one CSI restoration model is deployed in the network device 100, and optionally, at least one CSI generation model (not shown in the figure) may be included. The present disclosure does not limit the number of CSI generation model(s) deployed in the network device 100, and this figure shows one CSI restoration model deployed in the network device 100 as an example, but this does not constitute a limitation. Typically, for a single device (the network device 100 or the terminal device 200), the aforementioned CSI generation model(s) and CSI restoration model(s) deployed in the device may be deployed in pairs. Optionally, considering resource conservation, one CSI restoration model may be deployed in the network device 100 to achieve the purpose of CSI restoration. The present disclosure does not limit the value of N, and it may be determined according to actual situations, and typically N is a positive integer greater than or equal to 1.

In practical applications, the terminal device 200 may select one two-sided model from the N two-sided models as the first CSI model, and further use the first CSI model for CSI feedback. The implementation for selecting the first CSI model will be described in detail below and will not be described here. During implementation, the terminal device 200 uses the first CSI model to process its input initial CSI information. Specifically, the terminal device 200 uses a CSI generation model in the first CSI model to perform processing such as compression and quantization, etc. on the initial CSI information, and then the CSI information is input to a CSI restoration model in the first CSI model to perform processing such as decoding and restoration, etc. on the processed CSI information output by the CSI generation model, to obtain corresponding output CSI information. Typically, the processed CSI information and the restored CSI information are mathematically represented as binary bit streams. Further, the terminal device 200 may send the output CSI information processed by the first CSI model to the network device 100. Correspondingly, the network device 100 receives the output CSI information.

Understandably, since the CSI restoration model is deployed in the terminal device 200, the network device 100 may use the received CSI information as the restored CSI information output by the CSI restoration model in the network device 100 for subsequent calculation and processing, and the present disclosure does not impose any further limitations or details on this.

In practical applications, the CSI restoration model deployed in terminal device 200 and the CSI restoration model deployed in network device 100 may be the same or different, depending on the actual situations. Correspondingly, the CSI generation model deployed in terminal device 200 and the CSI generation model deployed in network device 100 may also be the same or different, depending on the actual situations. When the CSI restoration model deployed in terminal device 200 and the CSI restoration model deployed in network device 100 are the same, terminal device 200 may send the CSI information output by the CSI generation model in the first CSI model to network device 100. Correspondingly, network device 100 may select one CSI restoration model from at least one CSI restoration model as a decoding model, and further use the decoding model to restore the received CSI information to obtain restored CSI information. In this case, the restored CSI information is the same as the CSI information calculated and output by the CSI restoration model of the first CSI model in the terminal device 200. In other words, in this case, the CSI information output by the CSI restoration model in the first CSI model deployed in the terminal device 200 is the same as the CSI information output by the CSI restoration model in the decoding model deployed in the network device 100.

In the present disclosure a model deployed in the network device 100 or the terminal device 200 may be referred to as a target model. The target model includes, but is not limited to, the CSI generation model, the CSI restoration model, or the two-sided model described above. Referring to the embodiment described in FIG. 2 above, the target model may be obtained through training in the training device 300, and several possible specific implementations are described below.

First implementation: the training of a two-sided model is completed in a single-sided device (e.g., the network device 100 or the terminal device 200) and a part of sub-models of the trained two-sided model is sent to the device at the other side.

When the single-sided device is the network device 100, the present disclosure allows the training of the two-sided model (specifically, the CSI generation model and the CSI restoration model) to be completed in the network device 100, and further the CSI generation model in the trained two-sided model is sent to the terminal device 200, so as to facilitate the deployment of the trained CSI generation model in the terminal device 200. The present disclosure does not limit the number of the two-sided model(s), and the number may be determined based on actual situations.

When the single-sided device is the terminal device 200, the present disclosure allows training of the two-sided model (specifically, the CSI generation model and the CSI restoration model) to be completed in the terminal device 200, and further the CSI restoration model in the trained two-sided model is sent to the network device 100, so as to facilitate the deployment of the trained CSI restoration model in the network device 100.

Second implementation: the trained CSI generation model and the CSI restoration model are obtained through joint training in the network device 100 and the terminal device 200.

The present disclosure does not limit the implementation of the joint training. For example, in an example, relevant training data of the network device 100 and relevant training data of the terminal device 200 may be collected in the present disclosure, such as initial CSI information input to the terminal device 200 and restored CSI information output from the network device 100, etc.; further, the training data is used to complete model training in the network device 100 or the terminal device 200, etc. In another example, the training of the corresponding CSI generation model may be completed in the terminal device 200 in the present disclosure, keeping model parameters of the trained CSI generation model unchanged; further, training of the corresponding CSI restoration model is completed in network device 100. The present disclosure does not limit the number of the CSI generation model(s) and the number of the CSI restoration model(s); typically, the CSI generation model(s) and CSI restoration model(s) are deployed or appear in pair(s).

Third implementation: training of a two-sided model is completed in a single-sided device, and further, training data and/or other training assistance data related to a part of sub-models in the two-sided model is sent to the device at the other side to complete training of the part of sub-models. In practice, the third implementation has the following two implementation cases:
First, the present disclosure allows the training of the two-sided model (specifically, the CSI generation model and the CSI restoration model) to be first completed in the network device 100. Then, the training data related to the CSI generation model (e.g., the initial CSI information input to the CSI generation model) and/or other training assistance data (e.g., the real CSI information corresponding to the initial CSI information, etc.) is sent to the terminal device 200. Accordingly, the terminal device 200 completes the training of the CSI generation model based on the training data and/or other training assistance data related to the CSI generation model, and deploys the trained CSI generation model in the terminal device 200.
Second, the present disclosure allows training of the two-sided model (specifically, the CSI generation model and the CSI restoration model) to be first completed in the terminal device 200, and further, the training data (e.g., the CSI information input into the CSI restoration model) and/or other training assistance data (e.g., collected real restored CSI information, etc.) related to the CSI restoration model to the network device 100. Correspondingly, the network device 100 completes training of the CSI restoration model based on the training data and/or other training assistance data related to the CSI restoration model, and deploys the trained CSI restoration model in the network device 100. The present disclosure does not limit the number of the CSI generation model(s) and the number of the CSI restoration model(s); typically, the CSI generation model(s) and the CSI restoration model(s) are deployed or appear in pair(s).

It should be noted that the three implementations described above in the present disclosure may be implemented individually or any two or more of them may be combined to complete the training and deployment of N target models. The specific implementation can be determined based on actual situations, and the present disclosure does not impose further limitations or details. After completing the CSI generation model(s) and the CSI restoration model(s) described above, they may be deployed in the corresponding network device 100 and/or terminal device 200 according to actual needs.

Based on the foregoing embodiments, FIG. 4 is a schematic diagram of the structure of a terminal device according to an example embodiment. The terminal device 200 shown in FIG. 4 may include: a Radio Frequency (RF) circuit 210, a memory 220, an input unit 230, a display unit 240, a sensor 250, an audio circuit 260, a Wireless Fidelity (WiFi) module 270, a processor 280, and a power supply 290, etc. Those skilled in the art can understand that the device structure shown in FIG. 4 does not constitute a limitation on the terminal device, and the terminal device may include more or fewer components than that shown in this figure, or some components may be combined, or the terminal device may have a component arrangement different form that shown in this figure.

The following provides a detailed description of each component in the terminal device 200 with reference to FIG. 4.

The RF circuit 210 may be used for information transceiving or receiving and sending of signals during calls. Specifically, the RF circuit 210 receives downlink information from a base station and then sends the information to the processor 280 for processing. Additionally, the RF circuit 210 sends data related to uplink to the base station. Typically, the RF circuit 210 includes, but is not limited to, an antenna, at least one amplifier, a transceiver, a coupler, a Low-Noise Amplifier (LNA), a duplexer, etc. Furthermore, the RF circuit 210 may also communicate wirelessly with a network and other devices. The wireless communication may use any communication standard or protocol, including but not limited to: Global System of Mobile Communication (GSM), General Packet Radio Service (GPRS), Code Division Multiple Access (CDMA), Wideband Code Division Multiple Access (WCDMA), Long Term Evolution (LTE), email, Short Messaging Service (SMS), etc.

The memory 220 may be used to store software programs and modules. The processor 280 executes various functional applications and data processing of the terminal device by running the software programs and modules stored in the memory 220. The memory 220 may mainly include a program storage area and a data storage area. The program storage area may store an operating system, application programs required for at least one function (such as sound playback function, image playback function, etc.), and so on. The data storage area may store data created according to use of the terminal device (such as audio data, phone book, etc.). In addition, the memory 220 may include high-speed random access memory, and may also include non-volatile memory, such as at least one magnetic disk storage device, flash memory device, or other volatile solid-state storage device.

The input unit 230 may be used to receive input numerical or character information, and to generate key signal inputs related to user settings and function control of the terminal device. Specifically, the input unit 230 may include a touch panel 231 and other input device(s) 232. The touch panel 231, also known as a touch screen, may collect touch operations performed by a user on or near it (such as operations performed by the user using a finger, stylus, or any suitable object or accessory on or near the touch panel 231), and drive a corresponding connection device according to a pre-set program. Optionally, the touch panel 231 may include two parts: a touch detection device and a touch controller. The touch detection device detects the user's touch position and a signal generated by the touch operation, and sends the signal to the touch controller. The touch controller receives touch information from the touch detection device, converts it into touch point coordinates, sends them to the processor 280, and can receive and execute commands sent from the processor 280. In addition, the touch panel 231 may be implemented using various types such as resistive, capacitive, infrared, and surface acoustic wave, etc. In addition to the touch panel 231, the input unit 230 may also include other input device(s) 232. Specifically, other input device(s) 232 may include, but not limited to, one or more of the following: a physical keyboard, function buttons (such as volume control buttons, a power button, etc.), a trackball, a mouse, a joystick, etc.

The display unit 240 may be used to display information input by the user or information provided to the user, as well as various menus of the terminal device. The display unit 240 may include a display panel 241. Optionally, the display panel 241 may be configured using a form such as a Liquid Crystal Display (LCD), an Organic Light-Emitting Diode (OLED), etc. Further, touch panel 231 may cover the display panel 241. When the touch panel 231 detects a touch operation on or near it, the touch panel 231 sends the information to the processor 280 to determine the type of the touch event. Subsequently, the processor 280 provides corresponding visual output on the display panel 241 based on the type of the touch event. Although the touch panel 231 and the display panel 241 are shown as two separate components in FIG. 4 to implement the input and output functions of the terminal device, in some embodiments, the touch panel 231 and the display panel 241 may be integrated to achieve the input and output functions of the terminal device.

The terminal device may also include at least one sensor 250, such as a light sensor, a motion sensor, and other sensors. Specifically, the light sensor may include an ambient light sensor and a proximity sensor. The ambient light sensor may adjust the brightness of the display panel 241 according to the ambient light level, and the proximity sensor may turn off the display panel 241 and/or backlight when the terminal device is moved to the ear. As a type of the motion sensor, an accelerometer sensor may detect the magnitude of acceleration in various directions (generally three axes). When the terminal device is stationary, the magnitude and direction of gravity may be detected, and may be used for applications that identify the posture of the terminal device (such as landscape/portrait switching, related games, magnetometer posture calibration), vibration recognition related functions (such as pedometer, tapping), etc. Other sensors may be configured in the terminal device, such as a gyroscope, a barometer, a hygrometer, a thermometer, an infrared sensor, etc., and detailed descriptions will be omitted here.

The audio circuit 260, the speaker 261, and the microphone 262 may provide an audio interface between a user and the terminal device. The audio circuit 260 may convert received audio data into electrical signals and send them to the speaker 261. The speaker 261 converts them into sound signals for output. On the other hand, the microphone 262 converts collected sound signals into electrical signals, which are then received by the audio circuit 260 and converted into audio data. The audio data is then processed by the processor 280, and then sent via the RF circuit 210 to, for example, another terminal device, or the audio data may be output to the memory 220 for further processing.

The WiFi is a short-range wireless transmission technology. The terminal device may use the WiFi module 270 to help a user send and receive emails, browse web pages, and access streaming media, etc., providing the user with wireless broadband internet access. Although FIG. 4 shows the WiFi module 270, it can be understood that the WiFi module 270 is not an essential component of the terminal device and may be omitted as needed without altering the essence of the invention.

The processor 280 is the control center of the terminal device. The processor 280 connects various parts of the terminal device via various interfaces and lines. By running or executing software programs and/or modules stored in the memory 220, and by calling data stored in the memory 220, the processor performs various functions of the terminal device and processes data of the terminal device, thereby providing overall monitoring of the terminal device. Optionally, the processor 280 may include one or more processing units; preferably, the processor 280 may integrate an application processor and a modem processor. The application processor mainly processes the operating system, user interface, and applications, etc., and the modem processor mainly processes wireless communication. It is understood that the modem processor may not be integrated into the processor 280.

The terminal device also includes the power supply 290 (such as a battery) to power various components. Preferably, the power supply may be logically connected to the processor 280 through a power management system, thereby enabling functions such as charging, discharging, and power consumption management, etc. through the power management system. Although not shown, the terminal device 200 may also include devices such as a camera and a Bluetooth module, etc., which will not be described in detail here.

Based on the foregoing embodiments, the method embodiments involved in the present disclosure will be described below. FIG. is a schematic flowchart of a Channel Status Information (CSI) feedback determination method according to an example embodiment. The method shown in FIG. is applied to the communication systems shown in FIG. 1 and FIG. 2. The method may include the following implementation steps:
In S501, the terminal device 200 sends first indication information to the network device 100. The first indication information is used to determine a CSI feedback scheme used by the terminal device when the terminal device performs the CSI feedback to the network device. Correspondingly, the network device 100 receives the first indication information.

In the present disclosure, the first indication information is used to indicate/determine the CSI feedback scheme used by the terminal device 200 when the terminal device 200 performs the CSI feedback. The CSI feedback scheme includes a first feedback scheme (also referred to as a codebook-based feedback scheme) and/or a second feedback scheme (also referred to as a two-sided model-based feedback scheme). Specifically, the first feedback scheme is used to indicate the terminal device 200 to perform the CSI feedback based on codebook configuration information configured by the network device 100 for the terminal device 200. The codebook configuration information includes, but is not limited to: a codebook type, codebook parameter(s), or other codebook-related information, etc. The second feedback scheme is used to indicate the terminal device 200 to perform the CSI feedback based on a first CSI model that is pre-activated in the terminal device 200. The first CSI model may differ in different application scenarios, and its details are described in detail below and will not be repeated here.

In S502, the network device 100 determines the CSI feedback scheme of the terminal device based on the first indication information. The CSI feedback scheme includes the first feedback scheme and/or the second feedback scheme. The first feedback scheme is used to indicate the terminal device to perform the CSI feedback based on the codebook configuration information configured by the network device. The second feedback scheme is used to indicate the terminal device to perform the CSI feedback based on the pre-activated first CSI model.

The present disclosure does not limit the implementation for determining the CSI feedback scheme. Several possible implementations are described below as examples.

In an implementation, the first indication information may include first CSI information and second CSI information. The first CSI information is CSI information when the CSI feedback is performed based on the codebook configuration information using the first feedback scheme. The second CSI information is initial CSI information input to the first CSI model. In this case, the network device 100 may determine corresponding first performance indicator and second performance indicator based on the first indication information. The specific implementations for determining the first and second performance indicators are described below. In a specific implementation, the network device 100 may perform a performance indicator calculation based on the first CSI information and the second CSI information to obtain the first performance indicator. The first performance indicator is a performance indicator when the first feedback scheme is used. The first performance indicator may include, but is not limited to, for example, Square Generalized Cosine Similarity (SGCS), bit error rate (Block Error Result BLER), throughput, or other performance evaluation indicators, etc. Taking the square generalized cosine similarity as an example, the network device 100 may calculate the square generalized cosine similarity between the first CSI information and the second CSI information. Optionally, before performing the performance indicator calculation, the present disclosure may also perform corresponding preprocessing on the first CSI information and/or the second CSI information. The preprocessing may be determined according to actual needs, such as normalization processing, format conversion processing, or other custom processing, etc., and the present disclosure does not impose limitations on this. Furthermore, the network device 100 may calculate the square generalized cosine similarity between the preprocessed first CSI information and/or the preprocessed second CSI information to obtain the first performance indicator, etc.

The network device 100 may obtain third CSI information. The third CSI information may refer to CSI information output by the first CSI model, or may refer to CSI information output after restoring a fourth CSI model using a CSI restoration model deployed in network device 100. The fourth CSI information is CSI information when the CSI feedback is performed based on the first CSI model using the second feedback scheme. The specific content of the third CSI information may differ in different application scenarios, which will be described in detail below. Furthermore, the network device 100 may perform a performance indicator calculation based on the third CSI information and the second CSI information to obtain the second performance indicator. The second performance indicator is a performance indicator when the second feedback scheme is used. Regarding the description of the second performance indicator, reference may be made to the corresponding description of the first performance indicator above, and repeated descriptions will be omitted here. The CSI information involved in the present disclosure includes, but is not limited to: Channel Quality Indication (CQI), Precoding Matrix Indicator (PMI) and Rank Indicator (RI), or other information used to describe channel quality obtained through measurement.

The present disclosure does not limit the implementation for obtaining the third CSI information. For example, in an example, when the first indication information includes the third CSI information, the network device 100 may directly parse the first indication information to obtain the third CSI information. In another example, when the first indication information does not include the third CSI information, the network device 100 may obtain the third CSI information pre-stored locally. For example, in the scenario shown in FIG. 3(a), the first indication information may not include the third CSI information, in which case the network device 100 may obtain the CSI information output by its own deployed CSI restoration model as the third CSI information, etc.

After the network device 100 obtains the first performance indicator and the second performance indicator, the network device 100 may determine the CSI feedback scheme based on the first performance indicator and the second performance indicator. In an implementation, the network device 100 may determine the CSI feedback scheme by comparing the magnitudes of the first performance indicator and the second performance indicator. Two possible implementations are described below.

In a first implementation, when the first performance indicator is smaller than or equal to the second performance indicator, it indicates that the performance indicator when the CSI feedback is performed using the first feedback scheme is smaller than or equal to the performance indicator when the CSI feedback is performed using the second feedback scheme, and thus it can be determined that the CSI feedback scheme is the second feedback scheme. Conversely, when the first performance indicator is greater than the second performance indicator, it indicates that the performance indicator when the CSI feedback is performed using the first feedback scheme is greater than the performance indicator when the CSI feedback is performed using the second feedback scheme, and thus it can be determined that the CSI feedback scheme is the first feedback scheme.

In a second implementation, when the first performance indicator is smaller than the second performance indicator, it indicates that the performance indicator when the CSI feedback is performed using the first feedback scheme is smaller than the performance indicator when the CSI feedback is performed using the second feedback scheme, and thus it can be determined that the CSI feedback scheme is the second feedback scheme. Conversely, when the first performance indicator is greater than or equal to the second performance indicator, it indicates that the performance indicator when the CSI feedback is performed using the first feedback scheme is greater than or equal to the performance indicator when the CSI feedback is performed using the second feedback scheme, and thus it can be determined that the CSI feedback scheme is the first feedback scheme.

In practical applications, the first indication information may also include some custom information, such as CSI information (that is, the fourth CSI information mentioned above) when the terminal device 200 uses the second feedback scheme to perform the CSI feedback based on the first CSI model, etc., and the present disclosure does not impose too many limitations or details on this.

In another implementation, the first indication information includes first CSI information, second CSI information, and third CSI information. The network device 100 may determine corresponding first and second performance indicators based on the first indication information, and determine the final CSI feedback scheme based on the first and second performance indicators. The specific implementations for determining the first and second performance indicators are described below. In a specific implementation, the network device 100 may perform a performance indicator calculation based on the first CSI information and the second CSI information to obtain the first performance indicator. The network device 100 may also perform a performance indicator calculation based on the third and the second CSI information to obtain the second performance indicator. For details regarding the various CSI information, the calculation of the first and second performance indicators, and how to determine the CSI feedback scheme based on the first and second performance indicators, reference may be made to the relevant descriptions in the previous implementations, and repeated descriptions will be omitted here.

In another implementation, the first indication information includes the first performance indicator and the second performance indicator. The first performance indicator is a performance indicator when the first feedback scheme is used, and the second performance indicator is a performance indicator when the second feedback scheme is used. Correspondingly, the network device 100 may directly perform parsing based on the first indication information to obtain the first and second performance indicators, and then determine the final CSI feedback scheme based on the first and second performance indicators.

For details regarding the first performance indicator, the second performance indicator, and how to determine the CSI feedback scheme based on the first and second performance indices, reference may be made to the relevant descriptions in the previous implementations, and repeated descriptions will be omitted here.

In another implementation, to ensure the accuracy of the CSI feedback, each of the number of the first performance indicator(s) and the number of the second performance indicator(s) is S, where S is a positive integer determined according to actual situations. Generally, S is a positive integer greater than 1. In practical applications, the terminal device 200 may send S pieces of first indication information to the network device 100. Each piece of first indication information includes one first performance indicator and one second performance indicator. Alternatively, after the terminal device 200 obtains S first performance indicators and S second performance indicators through calculation, the terminal device 200 may send single first indication information to the network device 100. The first indication information includes S first performance indicators and S second performance indicators. Furthermore, the network device 100 may determine the CSI feedback scheme based on the S first performance indicators and S second performance indicators. The following describes two possible implementations.

In a first implementation, if the number of cases in which a first performance indicator is smaller than or equal to a second performance indicator, among the S first performance indicators and S second performance indicators, is relatively large, that is, when a first number is greater than or equal to a preset first number, it can be determined that the CSI feedback scheme is the second feedback scheme. The first number refers to the number of cases, among the S first performance indicators and the S second performance indicators, that meet the first performance indicator being smaller than or equal to the second performance indicator. Conversely, if the first number is smaller than the preset first number, it can be determined that the CSI feedback scheme is the first feedback scheme. The preset first number is a custom number threshold that is set according to actual needs, such as an empirical value set based on user experience, or a statistical value calculated based on a series of experimental data, etc., and the present disclosure does not limit it.

In a second implementation, if the number of cases in which a first performance indicator is greater than or equal to a second performance indicator, among the S first performance indicators and S second performance indicators, is relatively large, that is, when a second number is greater than or equal to a preset second number, it can be determined that the CSI feedback scheme is the first feedback scheme. The second number refers to the number of cases, among the S first performance indicators and the S second performance indicators, that meet the first performance indicator being greater than or equal to the second performance indicator. The preset second number may be the same as or different from the preset first number, and the present disclosure does not limit this. For a description of the preset second number, reference may be made to the description of the preset first number, and repeated description will be omitted here.

In another implementation, the first indication information may include the first CSI information. The network device 100 may determine that the CSI feedback scheme is the first feedback scheme (that is, the CSI feedback is performed based on codebook configuration information) based on the first CSI information.

In another implementation, the first indication information may include the third CSI information. The third CSI information may include CSI information output by the first CSI model when the CSI feedback is performed using the second feedback scheme. Correspondingly, the network device 100 may determine that the CSI feedback scheme is the second feedback scheme based on the third CSI information. The present disclosure does not limit the number of the third CSI information. When there are multiple pieces of third CSI information, these multiple pieces of third CSI information may be CSI information output by multiple CSI generation models deployed in the terminal device 200, etc. The network device 100 may determine that the CSI feedback scheme is the second feedback scheme based on these multiple pieces of third CSI information, and determine the first CSI model activated at the terminal device 200 side when the second feedback scheme is used. The specific implementations involved will be described in detail below in the present disclosure, and will not be repeated here.

In another implementation, the first indication information may include a recommended feedback scheme of the terminal device 200. Correspondingly, the network device 100 may determine the final CSI feedback scheme based on the recommended feedback scheme. The CSI feedback scheme may be the recommended feedback scheme, or may be a feedback scheme in the first and second feedback schemes that is different from the recommended feedback scheme. Specifically, the network device 100 may consider factors such as uplink transmission resource(s) allocated to the terminal device 200, a CSI feedback payload, etc., to determine whether to determine the recommended feedback scheme of the terminal device 200 as the final CSI feedback scheme. For example, if the recommended feedback scheme of the terminal device 200 has already taken the above factors into account, the recommended feedback scheme may be directly determined as the final CSI feedback scheme, etc., and the present disclosure does not impose limitations on this.

By implementing the embodiments of the present disclosure, the network device 100 receives the first indication information sent from the terminal device 200. The first indication information is used to determine the CSI feedback scheme used by the terminal device when the terminal device performs the CSI feedback to the network device. Based on the first indication information, the CSI feedback scheme is determined. The CSI feedback scheme includes the first feedback scheme and/or the second feedback scheme. The first feedback scheme is used to indicate the terminal device to perform the CSI feedback based on the codebook configuration information configured by the network device. The second feedback scheme is used to indicate the terminal device to perform the CSI feedback based on a pre-activated first CSI model. Therefore, the network device 100 can select a more suitable CSI feedback scheme for the terminal device 200 based on the first indication information sent from the terminal device 200, ensuring the accuracy of the CSI feedback and system performance. Accordingly, the accuracy of CSI feedback and the performance of data transmission can be improved.

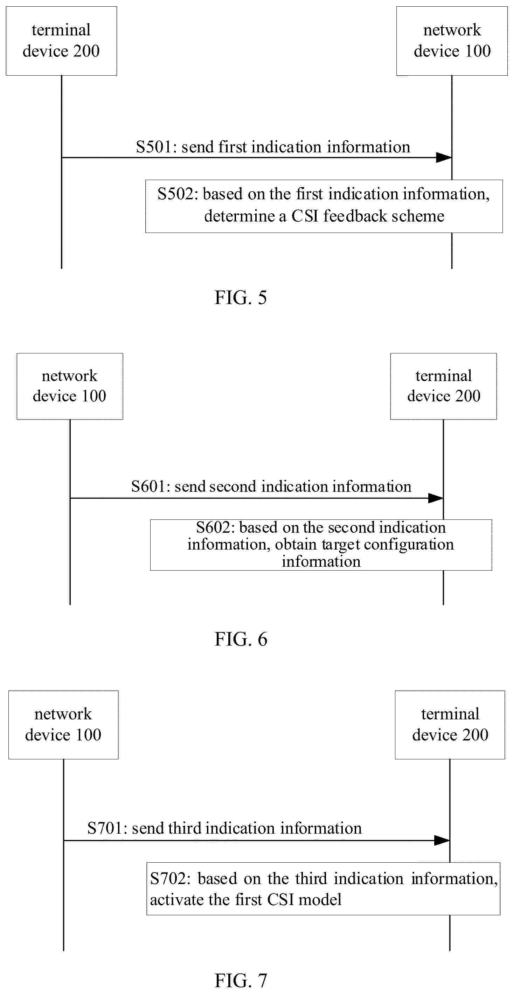

FIG. 6 is a schematic flowchart of another Channel Status Information (CSI) feedback determination method according to an example embodiment. The method shown in FIG. 6 is applied to the communication systems shown in FIG. 1 and FIG. 2. The method may include the following implementation steps:
In S601, the network device 100 sends second indication information to the terminal device 200. The second indication information is used to indicate target configuration information that is configured by the network device for the terminal device. The target configuration information includes at least the codebook configuration information, so that the terminal device performs the CSI feedback based on the codebook configuration information when the first feedback scheme is used. Correspondingly, the terminal device 200 receives the second indication information.
In S602, the terminal device 200 obtains the target configuration information based on the second indication information.

The network device 100 may pre-configure corresponding target configuration information for the terminal device 200. Specifically, the target configuration information configured by the network device 100 for terminal device 200 may be indicated through the second indication information. The target configuration information may include at least the codebook configuration information configured by the network device 100 for the terminal device 200. For a description of the codebook configuration information, reference may be made to the relevant description in the embodiment described in FIG. 5 above, which will not be repeated here. Optionally, the target configuration information may also include some parameter configuration information configured by the network device 100 for the terminal device 200. The parameter configuration information may be used to determine the first CSI model to be activated in terminal device 200. The parameter configuration information may include, but is not limited to, any one or more of the following information: such as, a CSI feedback payload, uplink transmission resource(s), number of subbands, a carrier size, number of transmission ports for a reference signal (e.g., number of CSI-RS ports), or other custom configuration parameters used to affect CSI feedback or reporting. The CSI feedback payload refers to the maximum or minimum CSI feedback payload size configured by network device 100 for terminal device 200. The uplink transmission resource(s) refers(refer) to transmission resource(s) supported to be used when the terminal device 200 communicates with the network device.

The present disclosure does not limit the implementation of sending the second indication information. For example, in an implementation, the network device 100 may periodically configure corresponding target configuration information for the terminal device 200. Correspondingly, the network device 100 may periodically and actively send the second indication information to the terminal device 200.

In another implementation, the terminal device 200 may actively send first request information to the network device 100 according to actual needs. The first request information is used to request the network device 100 to perform information configuration for the terminal device 200. Correspondingly, after the network device 100 receives the first request information, the network device 100 may, in response to/based on the first request information, send the second indication information to the terminal device 200 to configure the corresponding target configuration information for the terminal device 200.

Correspondingly, after the terminal device obtains the second indication information, the terminal device 200 may parse the second indication information to obtain the target configuration information. This facilitates subsequent use, for example, the terminal device 200 uses the configured uplink transmission resource(s) to conduct data communication with the network device 100.

FIG. 7 is a schematic flowchart of another Channel Status Information (CSI) feedback determination method according to an example embodiment. The method shown in FIG. 7 is applied in the communication systems shown in FIG. 1 and FIG. 2. The method may include the following implementation steps:
In S701, the network device 100 sends third indication information to the terminal device 200. The third indication information is used to indicate to activate the pre-deployed first CSI model in the terminal device 200. Correspondingly, the terminal device 200 receives the third indication information.
In S702, the terminal device 200 activates the first CSI model based on the third indication information.

Before the terminal device 200 uses the first CSI model to perform the CSI feedback, the terminal device 200 needs to first activate the first CSI model. In practical applications, the network device 100 may indicate activation of the first CSI model in the terminal device 200 through third indication information. The third indication information may include a model identity of the first CSI model. The model identity is used to indicate/distinguish the first CSI model. For example, the model identity may be a model number of the first CSI model, etc.

The present disclosure does not limit the implementation of sending the third indication information. For example, in an implementation, the network device 100 may actively perform monitoring and send the third indication information to the terminal device 200 to indicate activation of the first CSI model deployed in the terminal device 200.

In another implementation, the terminal device 200 may actively send second request information to the network device 100 according to actual needs. The second request information is used to request the network device 100 to activate a CSI model deployed in the terminal device 200. The activated CSI model may be referred to as the first CSI model. Accordingly, after the network device receives the second request information, the network device 100 may, in response to/based on the second request information, send the third indication information to the terminal device 200 to indicate activation of the first CSI model deployed in the terminal device 200.

In practical applications, the second request information may directly include the model identity of the first CSI model to request network device 100 to directly activate the first CSI model corresponding to the model identity. When the second request information does not include the model identity of the first CSI model, the network device 100 needs to actively perform monitoring and determine the first CSI model to be activated for the terminal device 200, which will be described in detail below.

It should be noted that the second request information and the first indication information involved in the present disclosure may be sent at the same time or at different times. The second request information and the first indication information may be carried in the same signaling or in different signaling for transmission, which may be determined according to actual communication needs, and the present disclosure does not limit this. The present disclosure does not limit the type of the signaling, for example, the signaling may include, but is not limited to, Radio Resource Control (RRC) signaling, Media Access Control (MAC) Control Element (MAC) signaling, or Downlink Control Information (DCI) signaling, etc.

The first request information and the second request information involved in the present disclosure may be sent at the same time or at different times. The first request information and the second request information may be carried in the same signaling or in different signaling, which may be determined according to actual communication needs, and the present disclosure does not limit this. Correspondingly, the second indication information and the third indication information involved in the present disclosure may be sent at the same time or at different times. The second indication information and the third indication information may be carried in the same signaling or in different signaling, which may be determined according to actual communication needs, and the present disclosure does not limit this.

For example, when the second request information and the first indication information are sent in the same signaling, the signaling is used to activate the first CSI model deployed in the terminal device 200 and is also used to determine the CSI feedback scheme of the terminal device 200. When the second request information and the first indication information are sent in different signaling, the second request information may request to activate the first CSI model deployed in the terminal device 200 in advance, and then the CSI feedback scheme of the terminal device 200 is determined based on the first indication information, so that the terminal device 200 can use the activated first CSI model to perform the CSI feedback using the corresponding CSI feedback scheme.

The following describes relevant embodiments for determining the first CSI model. The determination of the first CSI model may be performed at the terminal device 200 side or at the network device 100 side, depending on actual communication needs, and the present disclosure does not limit this. Whether the terminal device 200 or the network device 100 determines the first CSI model, the implementation for determination may be any one of the following:
In an implementation, in the application scenario shown in FIG. 3(a), N CSI generation models are deployed in the terminal device 300, where N is a positive integer determined according to actual needs. The first CSI model is one of the N CSI generation models.

During implementation, when N equals 1, the CSI generation model deployed in the terminal device 200 is an extendable CSI generation model. The length of CSI information output by the CSI generation model is variable and falls within a preset first range. The preset first range is a custom length range that is set according to actual needs, such as an interval range calculated based on a series of experimental data, etc. In this case, the first CSI model is the one CSI generation model deployed in the terminal device 200.

When N is a positive integer greater than 1, N CSI generation models are deployed in the terminal device 200, and the length of CSI information output by each CSI generation model is fixed, or falls within a preset second range. The length of the interval included/covered by the preset second range is usually shorter than the length of the interval included in the preset first range. The preset second range may also be a custom length range that is set according to actual needs, and the present disclosure does not limit it. In this case, the first CSI model is a CSI generation model, among the N CSI generation models, that meets a preset first condition. The preset first condition is a custom condition that is set to determine the first CSI model to be activated. For example, preset first condition may include, but is not limited to: a CSI generation model with the largest second performance indicator among second performance indicators respectively corresponding to M₁ CSI generation models, or a CSI generation model with the smallest absolute value of a difference between a CSI information payload output by the CSI generation model and a first feedback payload among abstract values of differences between CSI information payloads respectively output by N CSI generation models and the first feedback payload, or other custom model selection condition(s), etc., where M₁ is a positive integer smaller than or equal to N, and the first feedback payload is a feedback payload when the CSI feedback is performed based on the codebook configuration information using the first feedback scheme.

In practical applications, when the preset first condition includes the CSI generation model with the largest second performance indicator among second performance indicators respectively corresponding to M₁ CSI generation models, if M₁ equals N, the present disclosure does not need to perform selection on the N CSI generation models, and can directly select the CSI generation model with the largest second performance indicator from the N CSI generation models as the first CSI model.

If M₁ is smaller than N, the present disclosure needs to first selects M₁ CSI generation models from the N CSI generation models, and then selects the CSI generation model with the largest second performance indicator from the M₁ CSI generation models as the first CSI model. The M₁ CSI generation models may be CSI generation models selected from the N CSI generation models that match a preset selection condition. The preset selection condition includes, but is not limited to, any one or a combination of the following: for example, a channel environment between network device 100 and terminal device 200, parameter configuration information configured by the network device 100 for the terminal device 200 (e.g., a CSI feedback payload, uplink transmission resource(s), or the number of subbands, etc.), or other information that influences model selection, etc.

It should be noted that the above implementation of selecting/determining the first CSI model may be implemented at the network device 100 side or at the terminal device 200 side, which may be determined according to the actual situations, and the present disclosure does not limit this. Several possible implementations are described below.

In a possible implementation, N equals 1, and one CSI generation model is deployed in the terminal device 200. In this case, the terminal device 200 may directly use the CSI generation model as the first CSI model to be activated, and send the model identity of the model to the network device 100 in the aforementioned first indication information or second request information, so that the network device 100 can activate the first CSI model.

In another possible implementation, N is a positive integer greater than 1, and N CSI generation models are deployed in the terminal device 200. In this case, the terminal device 200 may carry third CSI information respectively corresponding to the N CSI generation models in the first indication information or the second request information and send it to the network device 100. The third CSI information is CSI information output by a corresponding CSI model. Correspondingly, the network device 100 may determine the final first CSI model to be activated based on the third CSI information respectively corresponding to the N CSI generation models. Finally, the network device 100 may indicate the terminal device 200 to activate the first CSI model through the third indication information. The implementation for determining the first CSI model is not limited. For example, referring to the foregoing embodiments, the network device 100 may calculate performance indicators based on the third CSI information respectively corresponding to the N CSI generation models to obtain the second performance indicators respectively corresponding to the N CSI generation models, and then find the CSI model with the largest indicator as the first CSI model to be activated. For example, the network device 100 may, based on a payload of the third CSI information (referred to as CSI information payload) corresponding to each of the N CSI generation models and a first feedback payload when the CSI feedback is performed based on the codebook configuration information, find the CSI generation model with the smallest absolute value of the difference between the third CSI information payload and the first feedback payload as the final first CSI model to be activated, etc. Reference may be made to the relevant descriptions in the aforementioned embodiments, and repeated descriptions or limitations will not be made here.

In another possible implementation, N is a positive integer greater than 1, and N CSI generation models are deployed in the terminal device 200. In this case, the terminal device 200 may calculate performance indicators based on the third CSI information respectively corresponding to the N CSI generation models, to obtain second performance indicators respectively corresponding to the N CSI generation models. Further, the second performance indicators respectively corresponding to the N CSI generation models are carried in the first indication information or second request information and sent to the network device 100. Correspondingly, the network device 100 may select the CSI generation model with the largest indicator among the second performance indicators respectively corresponding to the N CSI generation models as the first CSI model to be activated, and further indicate the terminal device 200 to activate the first CSI model through the third indication information. Regarding the calculation of the second performance indicators, reference may be made to the relevant description in the embodiments described in FIG. 5 above, and repeated descriptions will be omitted here.

In another possible implementation, N is a positive integer greater than 1, and N CSI generation models are deployed in the terminal device 200. In this case, the terminal device 200 may determine the final first CSI model to be activated based on the third CSI information respectively corresponding to the N CSI generation models. Regarding the implementation for determining the first CSI model, reference may be made to the relevant descriptions in the above embodiments. For example, the terminal device 200 may calculate performance indicators based on the third CSI information respectively corresponding to the N CSI generation models to obtain the second performance indicators for the N CSI generation models, and then find the CSI model with the largest indicator as the first CSI model to be activated. Further, the terminal device 200 may carry the model identity of the first CSI model in the first indication information or second request information and send it to the network device 100, so that the network device 100 can activate the first CSI model.

In another possible implementation, N is a positive integer greater than 1, and N CSI generation models are deployed in the terminal device 200. In this case, the terminal device 200 may select, among third CSI information respectively corresponding to the N CSI generation models, the third CSI information respectively corresponding to M₁ CSI generation models that matches the preset selection information. Further, the terminal device 200 may carry the third CSI information respectively corresponding to M₁ CSI generation models in the first indication information or second request information and send it to the network device 100. The third CSI information is the CSI information output by a corresponding CSI model. Correspondingly, the network device 100 may determine the final first CSI model to be activated based on the third CSI information respectively corresponding to the M₁ CSI generation models. Finally, the network device 100 may indicate the terminal device 200 to activate the first CSI model through the third indication information. Regarding the implementation for selecting the third CSI information and determining the first CSI model, reference may be made to the relevant descriptions in the foregoing embodiments, and repeated descriptions will be omitted here.

In another possible implementation, N is a positive integer greater than 1, and N CSI generation models are deployed in the terminal device 200. In this case, the terminal device 200 may select, among the third CSI information respectively corresponding to the N CSI generation models, third CSI information respectively corresponding to M₁ CSI generation models that matches the preset selection information. Further, the terminal device 200 may calculate performance indicators based on the third CSI information respectively corresponding to the M₁ CSI generation models to obtain the second performance indicators respectively corresponding to the M₁ CSI generation models. Furthermore, the terminal device 200 may carry the second performance indicators respectively corresponding to the M₁ CSI generation models in the first indication information or second request information and send them to the network device 100. Correspondingly, the network device 100 may select the CSI generation model with the largest indicator among the second performance indicators respectively corresponding to the M₁ CSI generation models as the final first CSI model, and finally indicate the terminal device 200 to activate the first CSI model through the third indication information.

In another possible implementation, N is a positive integer greater than 1, and N CSI generation models are deployed in the terminal device 200. In this case, the terminal device 200 may select, among the third CSI information respectively corresponding to the N CSI generation models, the third CSI information respectively corresponding to M₁ CSI generation models that matches the preset selection information. Further, the terminal device 200 may calculate performance indicators based on the third CSI information respectively corresponding to the M₁ CSI generation models to obtain the second performance indicators respectively corresponding to the M₁ CSI generation models. After calculating and obtaining the second performance indicators respectively corresponding to the M₁ CSI generation models, the terminal device 200 may select the CSI generation model with the largest indicator, among the second performance indicators respectively corresponding to the M₁ CSI generation models, as the final first CSI model. Finally, the model identity of the first CSI model is carried in the first indication information or second request information and sent to the network device 100, so that the network device 100 can activate the first CSI model.

In other words, in some optional embodiments, the first indication information or the second request information may include the first CSI information and the second CSI information. Optionally, the third CSI information respectively corresponding M₃ CSI generation models may also be included, where M₃ is a positive integer smaller than or equal to N, and the value of M₃ may be determined based on the number of CSI generation models related to determination of the first CSI model. For example, when N equals 1, M₃ is also 1; when N is a positive integer greater than 1, M₃ is M₁. Correspondingly, in this case, after the terminal device 200 sends the first indication information or the second request information to the network device 100, the network device 100 may calculate the corresponding performance indicators based on the corresponding CSI information and further determine the first CSI model to be activated. Regarding the calculation of performance indicators, reference may be made to the relevant descriptions of the first and second performance indicators in the embodiments described in FIG. 5 above, and repeated descriptions will be omitted here.

In some optional embodiments, the first indication information or the second request information may include the first performance indicator and second performance indicators respectively corresponding to the M₃ CSI generation models. In this case, the terminal device 200 needs to obtain the first CSI information, the second CSI information, and the third CSI information respectively corresponding to the M₃ CSI generation models, and further calculate the corresponding performance indicators based on the CSI information and send them to the network device 100. Regarding the calculation of the performance indicators, reference may be made to the relevant descriptions of the first and second performance indicators in the embodiments shown in FIG. 5 above, and repeated descriptions will be omitted here. It should be noted that the third CSI information used to calculate the second performance indicators in this application scenario refers to the (restored) CSI information output by the CSI restoration model deployed in the network device 100.

In practical applications, when the preset first condition includes the CSI generation model with the smallest absolute value of a difference between a CSI information payload output by the CSI generation model and a first feedback payload among abstract values of differences between CSI information payloads respectively output by N CSI generation models and the first feedback payload, the present disclosure may find, based on the CSI information payloads respectively output by the N CSI generation models and the first feedback payload when the CSI feedback is performed using the first feedback scheme, the CSI generation model with the smallest absolute value of the difference as the first CSI model. It is assumed that the CSI information payload output by the i-th CSI generation model is represented as Lᵢ and the first feedback payload is represented as L. The present disclosure finds the first CSI model to be activated based on Minᵢ{|L-Lᵢ|}. The present disclosure does not limit the CSI information payload respectively output by the N CSI generation models, and any two CSI information may be the same or different, and the present disclosure does not impose limitations on this. Furthermore, the implementation for determining the first CSI model may be executed at the network device 100 side or at the terminal device 200 side, and this may be determined according to actual communication needs, and the present disclosure does not impose limitations on this.

For example, taking the determination of the first CSI model by the network device 100 as an example, in this case, the first indication information or the second request information may include the first CSI information, the second CSI information, and the CSI information respectively output by the N CSI generation models. The payload of the first CSI information (i.e., the first feedback payload) and the payload of the CSI information (referred to as CSI information payload) respectively output by the N CSI generation models may also be included. Correspondingly, after the terminal device 200 sends the first indication information or the second request information to the network device 100, the network device 100 may calculate the CSI generation model with the smallest absolute value of the difference as the first CSI model, based on the first feedback payload corresponding to the first CSI information and the CSI information payloads respectively corresponding to the N CSI generation models.

The CSI information payload and the first feedback payload mentioned above in the present disclosure may both refer to the sum of CSI payloads respectively corresponding to V data transmission layers, where V is a positive integer. The V data transmission layers refer to the number of layers after layer mapping of downlink data (usually the Physical Downlink Shared Channel, PDSCH, downlink data) of the network device 100 through an encoded code length. The present disclosure does not impose further limitations or details on this.

In some embodiments, during the determination of the first CSI model, if it is detected in the present disclosure that multiple CSI information payloads are the same, that is, there is a case that numerical values of the abstract values of the differences between the CSI information payloads respectively output by the N CSI generation models and the first feedback payload are the same, the present disclosure may select, among the CSI generation models corresponding to the multiple same CSI information payloads, a CSI generation that matches the preset selection information as the final first CSI model. Regarding the description of the preset selection information, reference may be made to the relevant descriptions in the foregoing embodiments, and repeated descriptions will be omitted here.

In some embodiments, when an extendable CSI generation model is deployed in the terminal device 200, if the uplink transmission resource(s) configured by the network device 100 for the terminal device 200 is(are) decreased/reduced, the terminal device 200 omits a part of CSI information according to a preset CSI omission criterion. In this case, the first CSI information used to calculate the first performance indicator and the third CSI information used to calculate the second performance indicator both refer to remaining CSI information after omission. The preset CSI omission criterion is a custom CSI omission rule that is set according to actual situations, such as omitting lower-priority CSI information first, etc. The present disclosure does not limit this or give details on this. In specific implementation, in this case, the first CSI information refers to remaining CSI information after performing omission on the CSI information when the first feedback scheme is used for CSI feedback based on a preset CSI omission criterion. The third CSI information refers to remaining CSI information after performing omission on the CSI information output by the CSI generation model based on the preset CSI omission criterion.

In another implementation, in the application scenario shown in FIG. 3(b), N two-sided models are deployed in the terminal device 300, where N is a positive integer determined according to actual needs. The first CSI model is one of the N two-sided models, and the two-sided model includes a CSI generation model and a CSI restoration model that are deployed in a pair.

During implementation, when N equals 1, the two-sided model deployed in the terminal device 200 may be an extendable two-sided model. The length of the CSI information output by the CSI generation model in the two-sided model is variable and falls within a preset first range. In this case, the first CSI model is the two-sided model deployed in the terminal device 200.

When N is a positive integer greater than 1, N two-sided models are deployed in the terminal device, i.e., N CSI generation models and N CSI restoration models are deployed. The length of the CSI information output by each CSI generation model is fixed, or falls within a preset second range. For details regarding the preset first and second ranges, reference may be made to the relevant descriptions in the above embodiments, and repeated descriptions will be omitted here. In this case, the first CSI model is one of the N two-sided models that matches the preset selection information. For details regarding the preset selection information, reference may be made to the relevant descriptions in the above embodiments, and repeated descriptions will be omitted here.

In some embodiments, during the procedure of determining the first CSI model, when it is detected in the present disclosure that there are M₂ matching two-sided models, where M₂ is a positive integer smaller than or equal to N, the present disclosure may select a two-sided model with the largest indicator, among the second performance indicators respectively corresponding to the M₂ two-sided models, as the first CSI model.

It should be noted that the above-described implementations for selecting/determining the first CSI model may be implemented at the network device 100 side or at the terminal device 200 side, which may be determined according to the actual situations, and the present disclosure does not impose limitations on this. For example, the terminal device 200 may select, among N two-sided models deployed in the terminal device 200, M₂ two-sided models that match the preset selection information. Then, the terminal device 200 sends the relevant information (such as CSI information or performance indicators) respectively corresponding to the M₂ two-sided models to the network device 100, so that the network device 100 may determine the first CSI model to be activated. Several possible implementations are described below.

In a possible implementation, N equals 1, and one two-sided model is deployed in the terminal device 200. In this case, the terminal device 200 may directly use the two-sided model as the first CSI model to be activated, and carry a model identity of the model in the first indication information or second request information and send it to the network device 100, so that the network device 100 can activate the first CSI model.

In another possible implementation, N is a positive integer greater than 1, and N two-sided models are deployed in the terminal device 200. In this case, the terminal device 200 may carry third CSI information respectively corresponding to the N two-sided models in the first indication information or second request information and send it the network device 100. The third CSI information is the CSI information output by a corresponding two-sided model. Correspondingly, the network device 100 may determine the final first CSI model to be activated based on the third CSI information respectively corresponding to the N two-sided models. Finally, the network device 100 may indicate the terminal device 200 to activate the first CSI model through the third indication information. Regarding the implementation for determining the first CSI model, reference may be made to the relevant descriptions in the above embodiments, and repeated descriptions and limitations will not be provided here.

In another possible implementation, N is a positive integer greater than 1, and N two-sided models are deployed in the terminal device 200. In this case, the terminal device 200 may calculate performance indicators based on the third CSI information respectively corresponding to the N two-sided models, to obtain the second performance indicators respectively corresponding to the N two-sided models. Further, the second performance indicators respectively corresponding to the N two-sided models are carried in the first indication information or second request information and sent to the network device 100. Correspondingly, the network device 100 may select a two-sided model with the largest indicator among the second performance indicators respectively corresponding to the N two-sided models as the first CSI model to be activated, and further indicate the terminal device 200 to activate the first CSI model through the third indication information. Regarding the calculation of the second performance indicators, reference may be made to the relevant descriptions in the embodiments described in FIG. 5 above, and repeated descriptions will be omitted here.

In another possible implementation, N is a positive integer greater than 1, and N two-sided models are deployed in the terminal device 200. In this case, the terminal device 200 may determine the final first CSI model to be activated based on the third CSI information respectively corresponding to the N two-sided models. Regarding the implementation for determining the first CSI model, reference may be made to the relevant descriptions in the above embodiments. For example, the terminal device 200 may select, among the N two-sided models, a two-sided model that matches the preset selection information. Further, the terminal device 200 may carry the model identity of the first CSI model in the first indication information or second request information and send it to the network device 100, so that the network device 100 can activate the first CSI model.

In another possible implementation, N is a positive integer greater than 1, and N two-sided models are deployed in the terminal device. In this case, the terminal device 200 may select, among the third CSI information respectively corresponding to the N two-sided models, the third CSI information respectively corresponding to M₂ two-sided models that matches the preset selection information. Further, the terminal device 200 may carry the third CSI information respectively corresponding to the M₂ two-sided models in the first indication information or second request information and send it to the network device 100. The third CSI information is the CSI information output by a corresponding CSI model. Correspondingly, the network device 100 may determine the final first CSI model to be activated based on the third CSI information respectively corresponding to the M₂ two-sided models. Finally, the network device 100 may indicate the terminal device 200 to activate the first CSI model through the third indication information. Regarding the implementations for selecting the third CSI information and determining the first CSI model, reference may be made to the relevant descriptions in the above embodiments, and repeated descriptions are omitted here.

In another possible implementation, N is a positive integer greater than 1, and N two-sided models are deployed in the terminal device 200. In this case, the terminal device 200 may select, among the third CSI information respectively corresponding to the N two-sided models, the third CSI information respectively corresponding to M₂ two-sided models that matches the preset selection information. Further, the terminal device 200 may perform performance calculations based on the third CSI information respectively corresponding to the M₂ two-sided models to obtain the second performance indicators respectively corresponding to the M₂ two-sided models. Further, the terminal device 200 may carry the second performance indicators respectively corresponding to the M₂ two-sided models in the first indication information or second request information and send them to the network device 100. Correspondingly, the network device 100 may select a two-sided model with the largest indicator, among the second performance indicators respectively corresponding to the M₂ two-sided models, as the final first CSI model to be activated. Finally, the network device 100 may indicate the terminal device 200 to activate the first CSI model through the third indication information. Regarding the implementations for selecting the third CSI information and determining the first CSI model, reference may be made to the relevant descriptions in the above embodiments, and repeated descriptions are omitted here.

In another possible implementation, N is a positive integer greater than 1, and N two-sided models are deployed in the terminal device 200. In this case, the terminal device 200 may select, among the third CSI information respectively corresponding to the N two-sided models, the third CSI information respectively corresponding to M₂ two-sided models that matches the preset selection information. Further, the terminal device 200 may perform performance calculations based on the third CSI information respectively corresponding to the M₂ two-sided models to obtain the second performance indicators respectively corresponding to the M₂ two-sided models. Further, the terminal device 200 may select a two-sided model with the largest indicator, among the second performance indicators respectively corresponding to the M₂ two-sided models, as the final first CSI model to be activated. Finally, the model identity of the first CSI model is carried in the first indication information or second request information and sent to the network device 100, so that the network device 100 can activate the first CSI model.

In other words, in some optional embodiments, the first indication information or the second request information may include the first CSI information and the second CSI information. Optionally, third CSI information respectively corresponding to M₃ two-sided models may also be included, where M₃ is a positive integer smaller than or equal to N, and the value of M₃ may be determined based on the number of two-sided models related to the determination of the first CSI model. For example, when N equals 1, M₃ is also 1; when N is a positive integer greater than 1, M₃ is N or M₂. Correspondingly, in this case, after the terminal device 200 sends the first indication information or the second request information to the network device 100, the network device 100 may calculate corresponding performance indicators based on the corresponding CSI information and further determine the first CSI model to be activated. Regarding the calculation of performance indicators, reference may be made to the relevant descriptions of the first and second performance indicators in the embodiments described in FIG. 5 above, and repeated descriptions are omitted here.

In some other optional embodiments, the first indication information or the second request information may include the first performance indicator and second performance indicators respectively corresponding to the M₃ two-sided models. In this case, the terminal device 200 needs to obtain the first CSI information, the second CSI information, and the third CSI information respectively corresponding to the M₃ two-sided models, and further calculate the corresponding performance indicators based on the CSI information and send them to the network device 100. Regarding the calculation of the performance indicators, reference may be made to the relevant descriptions of the first and second performance indicators in the embodiments shown in FIG. 5 above, and repeated descriptions are omitted here. It should be noted that the third CSI information used to calculate a second performance indicator in this application scenario may refer to the CSI information output by a CSI restoration model in a corresponding two-sided model deployed in the terminal device 200. In practical applications, when the CSI restoration model in the corresponding two-sided model deployed in terminal device 200 is the same as the CSI restoration model deployed in network device 100, the third CSI information may refer to the CSI information output by the CSI restoration model in the corresponding two-sided model deployed in terminal device 200, or the third CSI information may refer to the CSI information output by the CSI restoration model deployed in network device 100, and in this case, they are the same. Conversely, when the CSI restoration model in the corresponding two-sided model deployed in terminal device 200 is different from the CSI restoration model deployed in network device 100, the third CSI information refers to the CSI information output by the CSI restoration model in the corresponding two-sided model deployed in terminal device 200.

In some embodiments, when an extendable CSI generation model is deployed in the terminal device 200, or when an extendable two-sided model (a CSI generation model and a CSI restoration model) is deployed in the terminal device 200, the third indication information sent by the network device 100 may also indicate that the CSI information payload output by the CSI restoration model deployed in the terminal device 200 is equal to the first feedback payload, or, may indicate that the absolute value of the difference between the CSI information payload output by the CSI restoration model deployed in the terminal device 200 and the first feedback payload is relatively small, for example, smaller than a preset first threshold. Regarding relevant descriptions of the CSI information payload and the first feedback payload, reference may be made to the relevant descriptions in the above embodiments, and repeated descriptions are omitted here. The preset first threshold is a custom threshold that is set according to actual needs, such as an empirical value that is set based on user experience, or a statistical value calculated based on a series of experimental data, etc., and the present disclosure does not limit this.

The following describes some optional embodiments involved in the present disclosure.

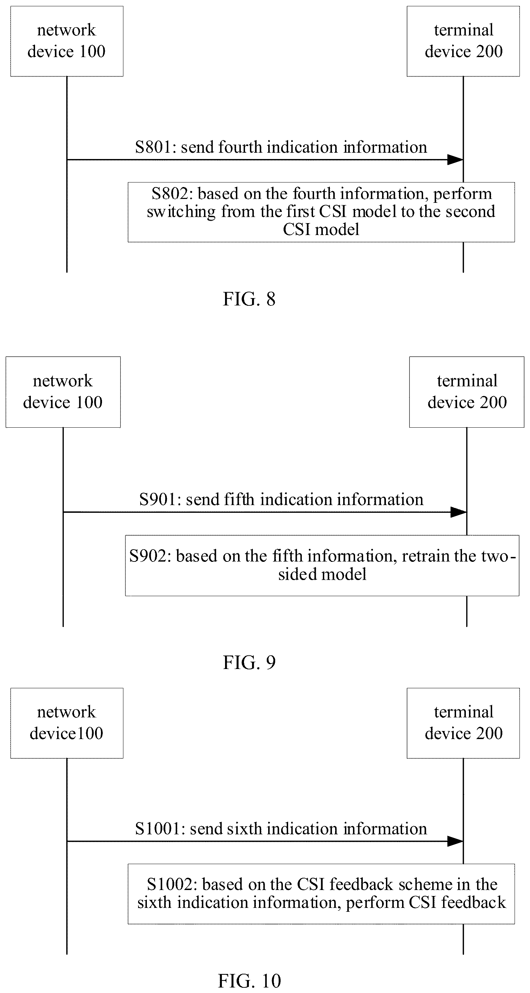

FIG. 8 is a schematic flowchart of model switching according to an example embodiment. The process shown in FIG. 8 is applied to the communication system shown in FIG. 1 or FIG. 2. N CSI generation models or N two-sided models are deployed in the terminal device 200, where N is a positive integer greater than 1. The process shown in FIG. 8 may include the following implementation steps:
In S801, the network device 100 may send fourth indication information to the terminal device 200. The fourth indication information is used to indicate the terminal device 200 to switch from the first CSI model to a second CSI model. Correspondingly, the terminal device 200 receives the fourth indication information.
In S802, based on the fourth indication information, the terminal device 200 switches from the first CSI model to the second CSI model.

The fourth indication information may include a model identity of the second CSI model to identify the second SCI model. After the terminal device 200 obtains the fourth indication information, the terminal device 200 may switch from the first CSI model to the second CSI model according to the indication of the fourth indication information. The second CSI model is a model deployed in the terminal device 200 that is different from the first CSI model.

The present disclosure does not limit the implementation of sending the fourth indication information. For example, in an example, the network device 100 may actively monitor whether the CSI feedback payload and/or the uplink transmission resource(s) configured by the network device 100 for the terminal device 200 have changed. When a change in the CSI feedback payload and/or the uplink transmission resource(s) is monitored, the network device 100 may actively send the fourth indication information to the terminal device 200. In this case, the second CSI model refers to a model deployed in terminal device 200 that matches the changed CSI feedback payload and/or the uplink transmission resource(s). This model may be a CSI generation model or a two-sided model, which may be determined according to the actual situations, and the present disclosure does not limit this.

In another example, when the terminal device 200 detects a change in the CSI feedback payload and/or the uplink transmission resource(s) configured by network device 100 for the terminal device 200, the terminal device 200 may actively send third request information to the network device. The third request information is used to request model switching for the first CSI model. Correspondingly, after the network device 100 receives the third request information, the network device 100 may, in response to/based on the third request information, send the fourth indication information to the terminal device 200 to indicate the terminal device 200 to switch from the first CSI model to the second CSI model. The second CSI model refers to a model deployed in terminal device 200 that matches the changed CSI feedback payload and/or uplink transmission resource(s). The implementation for determining the second CSI model may be executed at the network device 100 side or at the terminal device 200 side, and reference may be made to the relevant descriptions of how to determine the first CSI model, and the present disclosure does not impose further limitations or details on this.

In some embodiments, the fourth indication information may also indicate to deactivate the first CSI model. Correspondingly, based on the indication of the fourth indication information, the terminal device 200 deactivates the first CSI model, so that the terminal device 200 subsequently does not use the first CSI model.

In some embodiments, after the network device 200 monitors a change in the CSI feedback payload and/or the uplink transmission resource(s), the network device 100 may resend the second indication information to the terminal device 200 based on the changed CSI feedback payload and/or the uplink transmission resource(s), so as to reconfigure suitable target configuration information for the terminal device 200. The target configuration information includes, but is not limited to, reconfigured information such as a CSI feedback payload, uplink transmission resource(s), the number of subbands, the number of carriers, etc., that is reconfigured. Regarding related descriptions of the target configuration information and the second indication information, reference may be made to the relevant descriptions in the embodiments described in FIG. 6 above, and repeated descriptions are omitted here.

FIG. 9 is a schematic flowchart of model training according to an example embodiment. The process shown in FIG. 9 is applied to the communication system shown in FIG. 1 or FIG. 2. The process includes the following implementation steps:
In S901, the network device 100 sends the fifth indication information to the terminal device 200. The fifth indication information is used to indicate retraining of a two-sided model deployed between the terminal device and the network device. The two-sided model includes at least the first CSI model deployed in the terminal device. Correspondingly, the terminal device 200 receives the fifth indication information.
In S902, the terminal device 200 retrains the two-sided model based on the fifth indication information.

When the terminal device 200 has a model training capability, retraining and updating of the model may be implemented at the terminal device 200 side. When the terminal device 200 does not have the model training capability, the training device 300 (e.g., the network device 100 mentioned above) that is different from the terminal device 200 may implement retraining and updating of the model. Regarding implementations for training the two-sided model, reference may be made to the relevant descriptions of the embodiments shown in FIG. 2 above, as well as relevant descriptions of three implementations in which the training device 300 performs training to obtain the target model in the above embodiments, and repeated descriptions are omitted here. The embodiments of the present disclosure uses the terminal device 200 having the model training capability as an example for explanation of related contents, but the example does not constitute a limitation.

The present disclosure does not limit the implementation of sending the fifth indication information. For example, in an example, the network device 100 may actively send the fifth indication information to the terminal device 200 to indicate retraining of the two-sided model when the network device 100 actively monitors at least one of the following information: a change in the channel environment between the terminal device 200 and the network device 100 (e.g., switching from a medium-to-high-speed mobile scenario to a high-speed mobile scenario), a change in a data distribution of a respective model in the two-sided model (e.g., a change in the data distribution input to the CSI generation model, and/or a change in the data distribution output by CSI restoration model, etc.), or deterioration of the performance indicator when the second feedback scheme is used for CSI feedback (e.g., the absolute value of the difference between the first performance indicator when the first feedback scheme is used for CSI feedback and the second performance indicator when the second feedback scheme is used for CSI feedback is greater than a preset second threshold). The preset second threshold may be a custom threshold that is set according to actual needs, and the present disclosure does not limit this.

In another example, the terminal device 200 may actively send fourth request information to the network device 100 when the terminal device 200 monitors at least one of the following: a change in the channel environment between the terminal device 200 and the network device 100 (e.g., switching from a medium-to-high-speed mobile scenario to a high-speed mobile scenario), a change in the data distribution of a respective model in the two-sided model (e.g., a change in the data distribution input to the CSI generation model, and/or a change in the data distribution output by the CSI restoration model, etc.), or deterioration of the performance indicator when the second feedback scheme is for CSI feedback (e.g., the absolute value of the difference between the first performance indicator when the first feedback scheme is used for CSI feedback and the second performance indicator when the second feedback scheme is used for CSI feedback is greater than a preset second threshold). This fourth request information is used to request/indicate that terminal device 200 will retrain the two-sided model. Correspondingly, after the network device 100 receives the fourth request information, the network device 100 may, in response to/based on the fourth request information, send the fifth indication information to terminal device 200 to indicate terminal device 200 to retrain the two-sided model.

The present disclosure does not limit the implementation of retraining the two-sided model. For example, the terminal device 200 and the network device 100 may use a joint training method to complete the retraining of the two-sided model, or the terminal device 200 may independently complete the retraining of the entire two-sided model. Reference may be made to relevant descriptions regarding FIG. 2 and the relevant descriptions of the three training implementations in the above embodiments, and repeated descriptions will be omitted here.

FIG. 10 is a schematic flowchart of CSI feedback according to an example embodiment. The process shown in FIG. 10 is applied to the communication system in FIG. 1 or FIG. 2. The process includes the following implementation steps:
In S1001, the network device 100 sends sixth indication information to the terminal device 200. The sixth indication information includes the CSI feedback scheme. Correspondingly, the terminal device 200 receives the sixth indication information.
In S1002, the terminal device 200 performs the CSI feedback based on the CSI feedback scheme in the sixth indication information.

After the terminal device 200 obtains the CSI feedback scheme, the terminal device 200 may perform the CSI feedback based on the CSI feedback scheme. The following describes two possible implementations.

In a possible implementation, the CSI feedback scheme is the first feedback scheme. The terminal device 200 determines, based on the codebook configuration information, the Precoding Matrix Indication (PMI) corresponding to the codebook configuration information; then, based on the precoding matrix indication, the terminal device 200 performs CSI measurement and feeds back/sends the CSI information obtained through measurement to the network device 100. The CSI information involved in the present disclosure includes, but is not limited to: Channel Quality Indication (CQI), Precoding Matrix Indicator (PMI) and Rank Indicator (RI), or other information used to describe the channel quality obtained through measurement, etc.

In another possible implementation, the CSI feedback scheme is the second feedback scheme. The terminal device 200 feeds back/sends the CSI information output by the first CSI model deployed in the terminal device 200 to the network device 100.

In some embodiments, regardless of whether the terminal device currently uses the first feedback scheme or the second feedback scheme for CSI feedback, the CSI feedback scheme with the best data transmission performance may be determined using the embodiments described with reference to FIG. 5 to FIG. 7, and it can be further determined whether to fall back/switch from the currently used feedback scheme to ensure better data transmission performance.

For example, when the terminal device 200 already uses the second feedback scheme for CSI feedback before sending the first indication information to the network device 100, if the CSI feedback scheme re-determined according to the embodiment described with reference to FIG. 5 is the first feedback scheme, the network device 100 may send the sixth indication information to the terminal device 200. The sixth indication information may specifically be used to indicate the terminal device 200 to fall back/switch from the previous second feedback scheme to the first feedback scheme so as to perform the CSI feedback using the first feedback scheme. Correspondingly, after the terminal device 200 receives the sixth indication information, the terminal device 200 may fall back/switch from the previously used second feedback scheme to the first feedback scheme based on the indication of the sixth indication information, and then use the first feedback scheme for CSI feedback. Optionally, in this case, the sixth indication information may be further used to indicate deactivation of the pre-activated first CSI model in the terminal device 200. Correspondingly, the terminal device 200 may deactivate the first CSI model based on the indication of the sixth indication information to suspend use of the first CSI model.

As another example, when the terminal device 200 already uses the first feedback scheme for CSI feedback before sending the first indication information to the network device 100, if the CSI feedback scheme re-determined according to the embodiments described with reference to FIG. 5 is the second feedback scheme, the network device 100 may send the sixth indication information to the terminal device 200. The sixth indication information is specifically used to indicate the terminal device 200 to fall back/switch from the previous first feedback scheme to the second feedback scheme, so as to perform the CSI feedback using the second feedback scheme. Optionally, in this case, the terminal device 200 needs to pre-activate the first CSI model deployed in the terminal device 200 before performing the CSI feedback using the second feedback scheme. The present disclosure does not limit the implementation of activating the first CSI model. For example, the network device 100 may choose to send the sixth indication information and/or the third indication information to the terminal device 200 to indicate the terminal device 200 to activate the first CSI model. Regarding descriptions of the third indication information, reference may be made to relevant descriptions in the above embodiments, and repeated descriptions are omitted here. Taking the activation based on the sixth indication information as an example, the sixth indication information simultaneously indicates the terminal device 200 to use the second feedback scheme for CSI feedback and to activate the first CSI model deployed in the terminal device 200. Regarding the implementation for determining the first CSI model, reference may be made to the relevant descriptions in the above embodiments, and repeated descriptions will be omitted here. Correspondingly, after the terminal device 200 receives the sixth indication information, the terminal device 200 may activate the first CSI model and fall back/switch from the previous first feedback scheme to the second feedback scheme, and then use the second feedback scheme to perform the CSI feedback based on the activated first CSI model, etc.

It should be noted that the sixth indication information and the third indication information in the present disclosure may be carried in the same signaling or in different signaling for sending. The present disclosure does not limit the sending time of the sixth indication information and the third indication information, respectively. For example, the sixth indication information and the third indication information may be sent at the same time or at different times, which may be determined according to the actual situations.

To facilitate a better understanding of the embodiments of the present disclosure, examples are provided below.

First Embodiment: the terminal device 200 has not yet determined the final CSI feedback scheme.

It is assumed that an extendable CSI generation model is deployed in the terminal device 200, and the network device 100 pre-configures a Rel-16 Type II codebook type, codebook parameter(s), and other parameter configuration information for the terminal device 100, for example, the network device 100 configures the number of subbands, a carrier size (or a bandwidth size), etc., for determining the CSI feedback payload (size) of PMI when the CSI feedback is performed based on Rel-16 Type II codebook. The terminal device 200 determines transmission rank indication information of the terminal device 200 and its corresponding payload size (i.e., the first feedback payload mentioned above) based on downlink channel information (CSI information) estimated based on a reference signal and the Rel-16 Type II codebook.

The terminal device 200 uses the CSI generation model to perform processing such as compression and quantization, etc., on the input CSI information (downlink channel information), so that the processed CSI information payload (size) is equal to the payload size (the first feedback payload mentioned above) determined using the Rel-16 Type II codebook.

The terminal device 200 may send the CSI information output by the CSI generation model, the CSI information when the feedback is performed based on the Rel-16 Type II codebook, and Input-CSI-UE (the initial CSI information input to the CSI generation model) to the network device 100. The Input-CSI-UE may be reported to network device 100 through the CSI generation model or through codebook parameter(s), and the present disclosure does not impose limitations on this.

The network device 100 calculates SGCS1 (the first performance indicator) using the received Input-CSI-UE and the CSI information when the feedback is performed based on the Rel-16 Type II codebook. The network device 100 calculates SGCS2 (the second performance indicator) using the received Input-CSI-UE and the CSI information output by the CSI restoration model deployed in the network device 100. The CSI information output by the CSI restoration model deployed at the network device 100 side refers to CSI information output after restoring the CSI information output by the CSI generation model using the CSI restoration model. If SGCS1 is smaller than or equal to SGCS2, the final CSI feedback scheme of the terminal device 200 is determined to be the second feedback scheme, and the network device 100 indicates the terminal device 200 to perform the CSI feedback based on the CSI generation model deployed in the terminal device 200. Otherwise, the final CSI feedback scheme of the terminal device 200 is determined to be the first feedback scheme, and the network device 100 indicates the terminal device 200 to perform the CSI feedback based on the Rel-16 Type II codebook.

Optionally, the network device 100 may further send new indication information to the terminal device 200 to indicate the terminal device 200 to collect new training data and retrain a two-sided model (a CSI generation model and a CSI restoration model) deployed between the network device 100 and the terminal device 200 to update the corresponding model. After updating the model, the present disclosure may recalculate SGCS1 and SGCS2 based on the trained model according to the above processes to determine the CSI feedback scheme suitable for the terminal device 200. Reference can be made to relevant descriptions in the above embodiments, and repeated descriptions are omitted here.

Second Embodiment: the terminal device 200 has selected a CSI feedback scheme for CSI feedback, and the network device 100 actively monitors and determines a suitable CSI feedback scheme for the terminal device 200.

It is assumed that the terminal device 200 currently uses a CSI generation model for CSI feedback. Specifically, CSI information output by the CSI generation model may be sent to the network device 100. Due to limitations of uplink transmission resources, the network device 100 allocates a relatively small number of uplink transmission resource(s) for the terminal device 200 to send the CSI information. If the payload of the CSI information output by the CSI generation model dynamically changes, the terminal device 200 may omit a part of the CSI information according to the uplink transmission resource(s) configured by the network device 100 or the maximum CSI feedback payload, and then report the information to the network device 100. If the payload of the CSI information output by the CSI generation model is fixed, and other CSI generation models with different CSI information payloads are also deployed in the terminal device 200, the network device 100 may send indication information to the terminal device 200, to indicate the terminal device 200 to switch from the currently used CSI generation model to another CSI generation model, and the payload of the CSI information output by the CSI generation model which the terminal device 200 switches to is not greater than the CSI feedback payload configured by network device 100, and the absolute value of the difference between the two is minimized.

Optionally, the network device 100 may indicate the terminal device 100 to perform the CSI feedback based on the Rel-16 Type II codebook. If the CSI payload (i.e., the first feedback payload mentioned above) reported in this case is greater than the CSI feedback payload configured by the network device 100, the terminal device 100 may omit a part of the CSI information according to a CSI omission criterion supported by a current standard, and then the terminal device 100 reports the information to the network device 100. Alternatively, the network device 100 may configure new codebook configuration information for the terminal device 200, such as codebook parameter(s), etc., so that the CSI payload determined based on the new codebook configuration information is not greater than the CSI feedback payload configured by the network device 100, and the absolute value of the difference between the two is minimized.

In order to calculate intermediate performance indicator(s), the terminal device 200 also needs to report Input-CSI-UE to the network device 100. Similarly, the network device 100 calculates SGCS1 according to the CSI information fed back based on the Rel-16 Type II codebook and the Input-CSI-UE. The network device 100 calculates SGCS2 according to the CSI information output by the CSI restoration model deployed in the network device 100 and the Input-CSI-UE. Reference may be made to the relevant descriptions in the first embodiment above, and the network device 100 can determine the CSI feedback scheme suitable for the terminal device 200.

In the embodiment, a channel scenario which the terminal device 200 originally accesses is an Unlicensed Mobile Access (UMA) cell. Later, after movement, the terminal device 200 accesses an indoor scenario. If the terminal device 200 still uses the CSI generation model for the UMA scenario to feed back CSI, a decrease in data transmission performance may occur. In order to avoid this problem, an approach is to switch the CSI generation model currently being used by the terminal device 200 to a CSI generation model for the indoor scenario. However, using different CSI generation models for different scenarios may result in too many AI/ML models deployed at the terminal device 200 side. In order to solve the above problem, the terminal device 200 may send new indication information to the network device 100, indicating the terminal device 200 to collect training data in the indoor scenario to retrain the CSI generation model and the CSI restoration model, and update the corresponding models. After updating the models, the present disclosure may recalculate SGCS1 and SGCS2 based on the trained models according to the above process to determine a suitable CSI feedback scheme for the terminal device 200. Reference may be made to the relevant descriptions in the above embodiments, and repeated descriptions are omitted here.

Third Embodiment: the terminal device 200 has selected a CSI feedback scheme for CSI feedback, and the terminal device 200 requests the network device 100 to determine a suitable CSI feedback scheme for the terminal device 200.

Unlike the second embodiment, in this the embodiment, the terminal device 200 actively performs monitoring, and sends corresponding request information to the network device 100 to request the network device 100 to: determine a suitable CSI feedback scheme for the terminal device 200, determine whether to fall back from the currently used CSI feedback scheme to another CSI feedback scheme, determine whether to perform model switching, determine whether to perform model activation/deactivation, or determine whether to perform model retraining, etc.

For example, the terminal device 200 estimates downlink channel information (CSI information) using a reference signal, and calculates PMI based on a Rel-16 Type II codebook. It is assumed that the initial CSI information (Input-CSI-UE) input to the CSI generation model deployed in the terminal device is right singular eigenvector of the downlink channel information. If a CSI restoration model is also deployed in the terminal device, the terminal device may calculate SGCS2 based on the CSI information output by the CSI restoration model and the Input-CSI-UE, and calculate SGCS1 based on the obtained PMI and the Input-CSI-UE. The terminal device 200 may send SGCS1 and SGCS2 to the network device 100, allowing the network device 100 to determine a suitable CSI feedback scheme for the terminal device 200 based on SGCS1 and SGCS2.

For any content not introduced or described in the embodiments of the present disclosure, reference may be made to the relevant descriptions in the embodiments described with reference to FIG. 2 to FIG. 9 above, and repeated descriptions will be omitted here.

By implementing the embodiments of the present disclosure, the network device 100 receives the first indication information sent from the terminal device 200. The first indication information is used to determine the CSI feedback scheme used by the terminal device when the terminal device performs CSI feedback to the network device. Based on the first indication information, the CSI feedback scheme is determined. The CSI feedback scheme includes the first feedback scheme and/or the second feedback scheme. The first feedback scheme is used to indicate the terminal device to perform the CSI feedback based on the codebook configuration information configured by the network device. The second feedback scheme is used to indicate the terminal device to perform the CSI feedback based on the pre-activated first CSI model. Therefore, the network device 100 can select a more suitable CSI feedback scheme for the terminal device 200 based on the first indication information sent from the terminal device 200, ensuring the accuracy of the CSI feedback and system performance. Therefore, the embodiments of the present disclosure can improve the accuracy of the CSI feedback and the performance of data transmission.

In an example embodiment, the present disclosure further provides a communication system. The communication system may include the network device 100 and the terminal device 200. The network device 100 can perform the Channel Status Information (CSI) feedback determination method performed by the network device involved in the above embodiments of the present disclosure. The terminal device 200 can perform the Channel Status Information (CSI) feedback determination method performed by the terminal device in the above embodiments of the present disclosure.

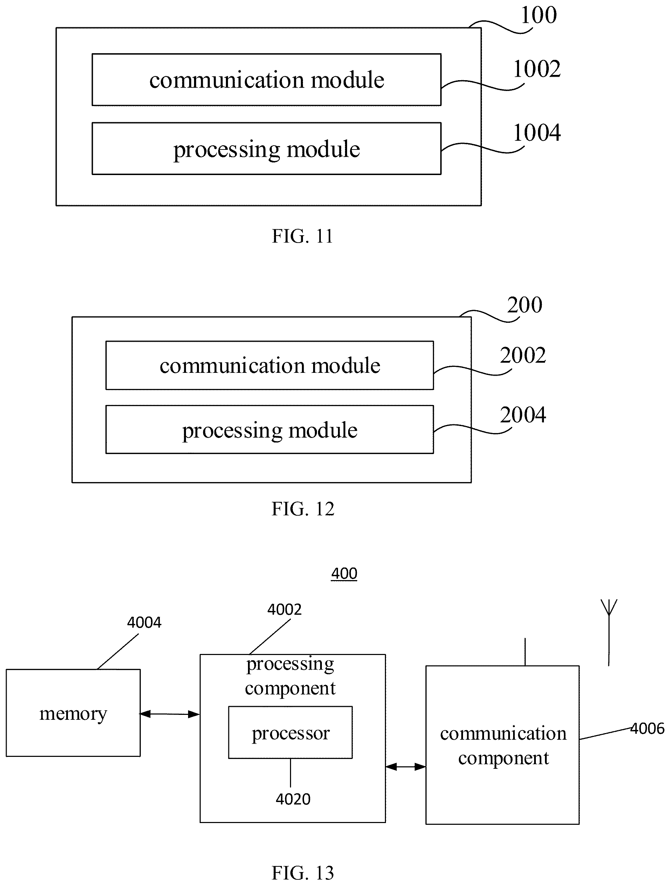

FIG. 11 is a schematic diagram of the structure of a Channel Status Information (CSI) feedback determination apparatus according to an example embodiment. The apparatus as shown in FIG. 11 may be applied in the network device 100. The apparatus may include a communication module 1002 and a processing module 1004.

The communication module 1002 is configured to, receive first indication information sent from a terminal device.

The processing module 1004 is configured to, based on the first indication information, determine a CSI feedback scheme of the terminal device. The CSI feedback scheme includes a first feedback scheme and/or a second feedback scheme. The first feedback scheme is used to indicate the terminal device to perform CSI feedback based on codebook configuration information configured by the network device. The second feedback scheme is used to indicate the terminal device to perform the CSI feedback based on a pre-activated first CSI model.

In some embodiments, the processing module 1004 is configured to: based on the first indication information, determine a first performance indicator and a second performance indicator, wherein the first performance indicator is a performance indicator when the CSI feedback is performed using the first feedback scheme, and the second performance indicator is a performance indicator when the CSI feedback is performed using the second feedback scheme; and determine the CSI feedback scheme based on the first performance indicator and the second performance indicator.

In some embodiments, the first indication information includes first CSI information and second CSI information, the first CSI information is CSI information when the CSI feedback is performed based on the codebook configuration information, the second CSI information is initial CSI information input to the first CSI model, the first performance indicator is obtained by performing a performance indicator calculation based on the first CSI information and the second CSI information, the second performance indicator is obtained by performing a performance indicator calculation based on obtained third CSI information and the second CSI information, and the third CSI information is CSI information output after restoring CSI information output by the first CSI model through a CSI restoration model deployed in the network device.

In some embodiments, the first indication information includes first CSI information, second CSI information and third CSI information, the first CSI information is CSI information when the CSI feedback is performed based on the codebook configuration information, the second CSI information is initial CSI information input to the first CSI model, the third CSI information is CSI information output by the first CSI model, the first performance indicator is obtained by performing a performance indicator calculation based on the first CSI information and the second CSI information, and the second performance indicator is obtained by performing a performance indicator calculation based on the third CSI information and the second CSI information.

In some embodiments, the first indication information includes the first performance indicator and the second performance indicator.

In some embodiments, the processing module 1004 is configured to:
when the first performance indicator is smaller than or equal to the second performance indicator, determine that the CSI feedback scheme is the second feedback scheme; or
when the first performance indicator is greater than or equal to the second performance indicator, determine that the CSI feedback scheme is the first feedback scheme.

In some embodiments, when there are S first performance indicators and S second performance indicators, S being a positive integer greater than 1, the processing module 1004 is configured to:
when a first number is greater than or equal to a preset first number, determine that the CSI feedback scheme is the second feedback scheme, wherein the first number is the number of cases, among the S first performance indicators and the S second performance indicators, that meet the first performance indicator being smaller than or equal to the second performance indicator; or
when a second number is greater than or equal to a preset second number, determine that the CSI feedback scheme is the first feedback scheme, wherein the second number is the number of cases, among the S first performance indicators and the S second performance indicators, that meet the first performance indicator being greater than or equal to the second performance indicator.

In some embodiments, the first indication information includes first CSI information or third CSI information, the first CSI information is CSI information when the CSI feedback is performed based on the codebook configuration information, and the third CSI information is CSI information output by the first CSI model; the processing module 1004 is configured to:
when the first indication information includes the first CSI information, determine that the CSI feedback scheme is the first feedback scheme; or
when the first indication information includes the third CSI information, determine that the CSI feedback scheme is the second feedback scheme.

In some embodiments, the first indication information includes a recommended feedback scheme of the terminal device, and the processing module 1004 is configured to:
based on the recommended feedback scheme, determining the CSI feedback scheme, wherein the CSI feedback scheme is the recommended feedback scheme, or the CSI feedback scheme is a feedback scheme in the first feedback scheme and the second feedback scheme that is different from the recommended feedback scheme.

In some embodiments, before receiving the first indication information sent from the terminal device, the communication module 1002 is further configured to:
send second indication information to the terminal device, wherein the second indication information is used to indicate target configuration information that is configured by the network device for the terminal device, and the target configuration information includes at least the codebook configuration information, so that the terminal device performs the CSI feedback based on the codebook configuration information when the first feedback scheme is used.

In some embodiments, the communication module 1002 is configured to:
receive first request information sent from the terminal device, wherein the first request information is used to request information configuration for the terminal device; and
based on the first request information, send the second indication information to the terminal device.

In some embodiments, when a CSI feedback payload and/or an uplink transmission resource configured by the network device changes, the communication module 1002 is configured to:
based on a changed CSI feedback payload and/or uplink transmission resource, send the second indication information to the terminal device.

In some embodiments, the target configuration information further includes parameter configuration information, the parameter configuration information is used to determine the first CSI model, and the parameter configuration information includes at least one of: a CSI feedback payload, an uplink transmission resource, the number of subbands, a carrier size, or the number of transmission ports for a reference signal.

In some embodiments, the communication module 1002 is further configured to:
send third indication information to the terminal device, wherein the third indication information is used to indicate to activate the first CSI model that is pre-deployed in the terminal device.

In some embodiments, the communication module 1002 is further configured to:
receive second request information sent from the terminal device, wherein the second request information is used to request activation of the first CSI model; and
based on the second request information, send the third indication information to the terminal device.

In some embodiments, N CSI generation models are deployed in the terminal device, where N is a positive integer greater than 1, the first CSI model is a CSI generation model among the N CSI generation models.

In some embodiments, when N is equal to 1, a length of the CSI information output by the CSI generation module is within a preset first range.

In some embodiments, when N is a positive integer greater than 1, a length of the CSI information output by each CSI generation module is fixed or within a preset second range, and the first CSI model is one CSI model, among the N CSI generation modules, that meets a preset first condition; the preset first condition includes: a CSI generation model with the largest second performance indicator among second performance indicators respectively corresponding to M₁ CSI generation models, or a CSI generation model with the smallest absolute value of a difference between a CSI information payload output by the CSI generation model and a first feedback payload among abstract values of differences between CSI information payloads respectively output by N CSI generation models and the first feedback payload, where M₁ is a positive integer smaller than or equal to N, the first feedback payload is a feedback payload when the CSI feedback is performed using the first feedback scheme, and the second performance indicator is a performance indicator when the CSI feedback is performed based on the CSI generation model.

In some embodiments, when M₁ is smaller than N, the M₁ CSI generation models are CSI generation models selected from the N CSI generation models that match preset selection information, wherein the preset selection information includes a channel environment between the terminal device and the network device, and/or parameter configuration information configured by the network device.

In some embodiments, when multiple same CSI information payloads exist, the first CSI model is a CSI generation model, determined from CSI generation models corresponding to the multiple same CSI information payloads, that matches the preset selection information, wherein the preset selection information includes the channel environment between the terminal device and the network device, and/or the parameter configuration information configured by the network device.

In some embodiments, N two-sided models are deployed in the terminal device, the two-sided model includes a CSI generation model and a CSI restoration model, N is a positive integer greater than 1, the first CSI model is a two-sided model among the N two-sided models.

In some embodiments, when N is equal to 1, a length of CSI information output by the CSI generation model is within a preset first range.

In some embodiments, when N is a positive integer greater than 1, a length of the CSI information output by each CSI generation model is fixed or within a preset second range, and the first CSI model is one two-sided model, among the N two-sided models, that matches preset selection information, the preset selection information includes an channel environment between the terminal device and the network device, and/or parameter configuration information configured by the network device.

In some embodiments, when M₂ matching two-sided models exist, the first CSI model is a two-sided model with the largest second performance indicator among second performance indicators respectively corresponding to the M₂ two-sided models, M₂ is a positive integer smaller than or equal to N, and the second performance indicator is a performance indicator when the CSI feedback is performed using a two-sided model indicated by the second feedback scheme.

In some embodiments, when a CSI generation model is deployed in the terminal device, the third indication information is further used to indicate that CSI information payload output by the CSI generation model is equal to a first feedback payload, or to indicate that an absolute value of a difference between the CSI information payload output by the CSI generation model and the first feedback payload is smaller than a preset first threshold, wherein the first feedback payload is a feedback payload when the CSI feedback is performed using the first feedback scheme.

In some embodiments, when a CSI generation model is deployed in the terminal device and an uplink transmission resource of the terminal device is reduced, if the first indication information includes first CSI information and third CSI information, the first CSI information is remaining CSI information after performing omission, based on a preset CSI omission criterion, on CSI information obtained when the CSI feedback is performed using the first feedback scheme, and the third CSI information is remaining CSI information after performing omission, based on a preset CSI omission criterion, on CSI information output by the CSI generation model.

In some embodiments, the first indication information includes third CSI information or second performance indicators respectively corresponding to M₃ CSI generation models, wherein the third CSI information is CSI information output by a CSI restoration model deployed in the network device, the second performance indicator is a performance indicator when the CSI feedback is performed based on the CSI generation model, and M₃ is a positive integer smaller than or equal to N.

In some embodiments, the first indication information includes third CSI information or second performance indicators respectively corresponding to M₃ two-sided models, wherein M₃ is a positive integer smaller than or equal to N; if a CSI restoration model deployed in the terminal device is the same as a CSI restoration model deployed in the network device, the third CSI information is CSI information output by the CSI restoration model deployed in the network device, or the third CSI information is CSI information output by the CSI restoration model deployed in the terminal device; if the CSI restoration model deployed in the terminal device is different from the CSI restoration model deployed in the network device, the third CSI information is the CSI information output by the CSI restoration model deployed in the terminal device; the second performance indicator is a performance indicator when the CSI feedback is performed based on the two-sided model.

In some embodiments, when a CSI feedback payload and/or an uplink transmission resource configured by the network device changes, N being a positive integer greater than 1, the communication module 1002 is further configured to:
send fourth indication information to the terminal device, wherein the fourth indication information is used to indicate the terminal device to switch from the first CSI model to a second CSI model, and the second CSI model is a model deployed in the terminal device that matches the changed CSI feedback payload and/or the uplink transmission resource.

In some embodiments, the communication module 1002 is configured to:
receive third request information sent from the terminal device, wherein the third request information is sent from the terminal device when the terminal device monitors a change in the CSI feedback payload and/or the uplink transmission resource configured by the network device, and is used to request model switching for the first CSI model; and
based on the third request information, sending the fourth indication information to the terminal device.

In some embodiments, the communication module 1002 is configured to:
when a change in the CSI feedback payload and/or the uplink transmission resource configured by the network device is monitored, send the fourth indication information to the terminal device.

In some embodiments, the fourth indication information is further used to indicate deactivation of the first CSI model.

In some embodiments, the communication module 1002 is further configured to:
send fifth indication information to the terminal device, wherein the fifth indication information is used to indicate retraining of a two-sided model deployed between the terminal device and the network device, and the two-sided model includes at least the first CSI model deployed in the terminal device.

In some embodiments, the communication module 1002 is configured to:
send the fifth indication information to the terminal device when at least one of the following information is monitored: a change in a channel environment between the terminal device and the network device, a change in a data distribution of a respective model of the two-sided model, or an absolute value of a difference between a first performance indicator and a second performance indicator being greater than a preset second threshold;
wherein the first performance indicator is a performance indicator when the CSI feedback is performed using the first feedback scheme, and the second performance indicator is a performance indicator when the CSI feedback is performed using the second feedback scheme.

In some embodiments, the communication module 1002 is configured to:
receive fourth request information sent from the terminal device, wherein the fourth request information is used to request retraining of the two-sided model deployed between the terminal device and the network device; and
based on the third request information, sending the fifth indication information to the terminal device.

In some embodiments, the communication module 1002 is further configured to:
send sixth indication information to the terminal device, wherein the sixth indication information includes the CSI feedback scheme to cause the terminal device to perform the CSI feedback based on the CSI feedback scheme.

In some embodiments, the terminal device adopts the second feedback scheme for CSI feedback before sending the first indication information. If the determined CSI feedback scheme is the first feedback scheme, the sixth indication information is used to indicate the terminal device to fall back from the second feedback scheme to the first feedback scheme, so as to perform the CSI feedback using the first feedback scheme.

In some embodiments, the sixth indication information is further used to indicate to deactivate the first CSI model.

FIG. 12 is a schematic diagram of the structure of a Channel Status Information (CSI) feedback determination apparatus according to an example embodiment. The apparatus as shown in FIG. 12 may be applied in the terminal device 200. The apparatus may include a communication module 2002.

The communication module 2002 is configured to send first indication information to a network device, wherein the first indication information is used for the network device to determine a CSI feedback scheme used by the terminal device when the terminal device performs CSI feedback to the network device, the CSI feedback scheme includes a first feedback scheme and/or a second feedback scheme, the first feedback scheme is used to indicate the terminal device to perform the CSI feedback based on codebook configuration information configured by the network device, and the second feedback scheme is used to indicate the terminal device to perform the CSI feedback based on a pre-activated first CSI model.

In some embodiments, the first indication information includes first CSI information and second CSI information, the first CSI information is CSI information when the CSI feedback is performed based on the codebook configuration information, and the second CSI information is initial CSI information input to the first CSI model.

In some embodiments, the first indication information includes first CSI information, second CSI information and third CSI information, the first CSI information is CSI information when the CSI feedback is performed based on the codebook configuration information, the second CSI information is initial CSI information input to the first CSI model, and the third CSI information is CSI information output by the first CSI model.

In some embodiments, the first indication information includes a first performance indicator and a second performance indicator, the first performance indicator is a performance indicator when the CSI feedback is performed using the first feedback scheme, and the second performance indicator is a performance indicator when the CSI feedback is performed using the second feedback scheme.

In some embodiments, the first indication information includes first CSI information or third CSI information, the first CSI information is CSI information when the CSI feedback is performed based on the codebook configuration information, and the third CSI information is CSI information output by the first CSI model.

In some embodiments, the first indication information includes a recommended feedback scheme of the terminal device.

In some embodiments, the communication module 2002 is further configured to: receive second indication information sent from the network device, wherein the second indication information is used to indicate target configuration information that is configured by the network device for the terminal device, and the target configuration information includes at least the codebook configuration information.

In some embodiments, the apparatus may further include a processing module 2004;
the communication module 2002 is further configured to receive third indication information sent from the network device, wherein the third indication information is used to indicate to activate the first CSI model which is pre-deployed in the terminal device; and
the processing module 2004 is further configured to, based on the third indication information, activate the first CSI model.

In some embodiments, a CSI generation model is deployed in the terminal device, a length of CSI information output by the CSI generation model is within a preset first range, and the first CSI model is the CSI generation model.

In some embodiments, N CSI generation models are deployed in the terminal device, where N is a positive integer greater than 1, a length of CSI information output by each of the CSI generation models is fixed or within a preset second range, and the first CSI model is a CSI generation model among the N CSI generation models that meets a preset first condition, the preset first condition includes: a CSI generation model with the largest second performance indicator among second performance indicators respectively corresponding to M₁ CSI generation models, or a CSI generation model with the smallest absolute value of a difference between a CSI information payload output by the CSI generation model and a first feedback payload among abstract values of differences between CSI information payloads respectively output by N CSI generation models and the first feedback payload, where M₁ is a positive integer smaller than or equal to N, the first feedback payload is a feedback payload when the CSI feedback is performed using the first feedback scheme, and the second performance indicator is a performance indicator when the CSI feedback is performed based on the CSI generation model.

In some embodiments, a two-sided model is deployed in the terminal device, the two-sided model includes a CSI generation model and a CSI restoration model, a length of CSI information output by the CSI generation model is within a preset first range, and the first CSI model is the two-sided model.

In some embodiments, N two-sided models are deployed in the terminal device, the two-sided model includes a CSI generation model and a CSI restoration model, where N is a positive integer greater than 1, a length of CSI information output by each of the CSI generation models is fixed or within a preset second range, the first CSI model is a two-sided model among the N two-sided models that matches preset selection information, the preset selection information includes a channel environment between the terminal device and the network device, and/or parameter configuration information configured by the network device.

In some embodiments, when a CSI feedback payload and/or an uplink transmission resource configured by the network device changes, N being a positive integer greater than 1, the communication module 2002 is further configured to:
receive fourth indication information sent from the network device, wherein the fourth indication information is used to indicate the terminal device to switch from the first CSI model to a second CSI model, the second CSI model is a model deployed in the terminal device that matches the changed CSI feedback payload and/or the uplink transmission resource; and
the processing module 2004 is further configured to, based on the fourth indication information, switch from the first CSI model to the second CSI model.

In some embodiments:
the communication module 2002 is further configured to: receive fifth indication information sent from the network device, wherein the fifth indication information is used to indicate retraining of a two-sided model deployed between the terminal device and the network device, and the two-sided model includes at least the first CSI model deployed in the terminal device; and
the processing module 2004 is further configured to, based on the fifth indication information, retrain the two-sided model deployed between the terminal device and the network device.

In some embodiments, the communication module 2002 is further configured to: receive sixth indication information sent from the network device, wherein the sixth indication information includes the CSI feedback scheme; and
the processing module 2004 is further configured to perform the CSI feedback based on the CSI feedback scheme in the sixth indication information.

In some embodiments, the CSI feedback scheme is the second feedback scheme, and the processing module 2004 is configured to feed back the CSI information output by the first CSI model in the terminal device to the network device.

In some embodiments, the terminal device adopts the second feedback scheme for CSI feedback before sending the first indication information. If the CSI feedback scheme is the first feedback scheme, the sixth indication information is used to indicate the terminal device to fall back from the second feedback scheme to the first feedback scheme, so as to perform the CSI feedback using the first feedback scheme;
the processing module 2004 is configured to, based on the sixth indication information, fall back from the second feedback scheme to the first feedback scheme, and perform the CSI feedback using the first feedback scheme.

In some embodiments, the sixth indication information is further used to indicate to deactivate the first CSI model; the processing module 2004 is further configured to deactivate the first CSI model based on the sixth indication information.

Regarding the apparatuses in the above embodiments, the specific manner in which each module performs its operation has been described in detail in the method embodiments, and will not be elaborated here. Reference may be made to the relevant descriptions in the above method embodiments.

FIG. 13 is a schematic diagram of the structure of a communication apparatus according to an example embodiment. The communication apparatus 400 may be the network device 100 in the communication system or the terminal device 200 in the communication system.

Referring to FIG. 13, the communication apparatus 400 may include one or more of the following components: a processing component 4002, a memory 4004, and a communication component 4006.

The processing component 4002 may be used to control the overall operations of the communication apparatus 400, such as operations associated with display, telephone calls, data communication, camera operations, and recording operations. The processing component 4002 may include one or more processors 4020 to execute instructions to complete all or part of the steps of the Channel Status Information (CSI) feedback determination methods described above. Furthermore, the processing component 4002 may include one or more modules to facilitate interactions between processing component 4002 and other components. For example, the processing component 4002 may include a multimedia module to facilitate interactions between the multimedia component and the processing component 4002.

The memory 4004 is configured to store various types of data to support the operations of the communication apparatus 400. Examples of the data include instructions for any application program or method operating on the communication apparatus 400, contact data, phonebook data, messages, pictures, videos, etc. The memory 4004 may be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic storage, a flash memory, a magnetic disk, or an optical disk.

The communication component 4006 is configured to facilitate wired or wireless communication between the communication apparatus 400 and other devices. The communication apparatus 400 may access wireless networks based on communication standards, such as Wi-Fi, 2G, 3G, 4G, 5G, 6G, NB-IoT, eMTC, etc., or combinations thereof. In an example embodiment, the communication component 4006 receives broadcast signals or broadcast-related information from an external broadcast management system via a broadcast channel. In an examle embodiment, the communication component 4006 also includes a Near-Field Communication (NFC) module to facilitate short-range communications. For example, the NFC module may be implemented based on Radio Frequency Identification (RFID) technologies, Infrared Data Association (IrDA) technologies, Ultra-Wideband (UWB) technologies, Bluetooth (BT) technologies, and other technologies.

In an example embodiment, the communication apparatus 400 may be implemented by one or more Application Specific Integrated Circuits (ASICs), Digital Signal Processors (DSPs), Digital Signal Processing Devices (DSPDs), Programmable Logic Devices (PLDs), Field-Programmable Gate Arrays (FPGAs), controllers, microcontrollers, microprocessors, or other electronic components to perform the above Channel Status Information (CSI) feedback determination methods.

The communication apparatus 400 may be a standalone electronic device or may be a part of a standalone electronic device. For example, in an embodiment, the electronic device may be an Integrated Circuit (IC) or a chip. The integrated circuit may be a single IC or a collection of multiple ICs. The chip may include, but is not limited to, the following types: Graphics Processing Unit (GPU), Central Processing Unit (CPU), Field Programmable Gate Array (FPGA), Digital Signal Processor (DSP), Application Specific Integrated Circuit (ASIC), System on Chip (SOC, or system-level chip), etc. The above integrated circuit or chip may be used to execute executable instructions (or codes) to implement the above Channel Status Information (CSI) feedback determination methods. The executable instructions may be stored in the integrated circuit or chip or may be obtained from other apparatuses or devices. For example, the integrated circuit or chip includes a processor, a memory, and an interface for communicating with other devices. The executable instructions may be stored in the processor, and when the executable instructions are executed by the processor, the processor is caused to implement the Channel Status Information (CSI) feedback determination methods described above; or, the integrated circuit or chip may receive the executable instructions through the interface and send them to the processor for execution to implement the Channel Status Information (CSI) feedback determination methods described above.

In an example embodiment, the present disclosure further provides a computer-readable storage medium. Computer program instructions are stored on the computer-readable storage medium. When the computer program instructions are executed by a processor, the steps of the Channel Status Information (CSI) feedback determination method provided in the present disclosure are implemented. For example, the computer-readable storage medium may be a non-transitory computer-readable storage medium including instructions, such as the memory 4004 including instructions. The instructions may be executed by the processor 4020 of the communication apparatus 400 to complete the Channel Status Information (CSI) feedback determination methods. For example, the non-transitory computer-readable storage medium may be a ROM, a Random Access Memory (RAM), a CD-ROM, a magnetic tape, a floppy disk, and an optical data storage device, etc.

In another example embodiment, a computer program product is also provided. The computer program product includes a computer program executable by a programmable apparatus. The computer program has a code portion which, when executed by the programmable apparatus, implement the Channel Status Information (CSI) feedback determination methods described above.

Other implementations of the present disclosure will be apparent to those skilled in the art from consideration of the specification and practice of the disclosure herein. The present disclosure is intended to cover any variations, uses, or adaptations of the present disclosure following the general principles thereof and including such departures from the present disclosure as come within known or customary practice in the art. It is intended that the specification and embodiments be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A Channel Status Information (CSI) feedback determination method, comprising:
receiving, by a network device, first indication information sent from a terminal device; and
based on the first indication information, determining a CSI feedback scheme of the terminal device, wherein the CSI feedback scheme comprises a first feedback scheme and/or a second feedback scheme, the first feedback scheme is used to indicate the terminal device to perform CSI feedback based on codebook configuration information configured by the network device, and the second feedback scheme is used to indicate the terminal device to perform the CSI feedback based on a pre-activated first CSI model.

2. The method according to claim 1, wherein determining the CSI feedback scheme of the terminal device based on the first indication information comprises:
based on the first indication information, determining a first performance indicator and a second performance indicator, wherein the first performance indicator is a performance indicator when the CSI feedback is performed using the first feedback scheme, and the second performance indicator is a performance indicator when the CSI feedback is performed using the second feedback scheme; and
determining the CSI feedback scheme based on the first performance indicator and the second performance indicator.

3. The method according to claim 2, wherein the first indication information comprises first CSI information and second CSI information, the first CSI information is CSI information when the CSI feedback is performed based on the codebook configuration information, the second CSI information is initial CSI information input to the first CSI model, the first performance indicator is obtained by performing a performance indicator calculation based on the first CSI information and the second CSI information, the second performance indicator is obtained by performing a performance indicator calculation based on obtained third CSI information and the second CSI information, and the third CSI information is CSI information output after restoring CSI information output by the first CSI model through a CSI restoration model deployed in the network device.

4. The method according to claim 2, wherein the first indication information comprises first CSI information, second CSI information and third CSI information, the first CSI information is CSI information when the CSI feedback is performed based on the codebook configuration information, the second CSI information is initial CSI information input to the first CSI model, the third CSI information is CSI information output by the first CSI model, the first performance indicator is obtained by performing a performance indicator calculation based on the first CSI information and the second CSI information, and the second performance indicator is obtained by performing a performance indicator calculation based on the third CSI information and the second CSI information.

5. The method according to claim 2, wherein the first indication information comprises the first performance indicator and the second performance indicator.

6. The method according to any one of claims 2 to 5, wherein determining the CSI feedback scheme based on the first performance indicator and the second performance indicator comprises:
when the first performance indicator is smaller than or equal to the second performance indicator, determining that the CSI feedback scheme is the second feedback scheme; or
when the first performance indicator is greater than or equal to the second performance indicator, determining that the CSI feedback scheme is the first feedback scheme.

7. The method according to claim 6, wherein when there are S first performance indicators and S second performance indicators, S being a positive integer greater than 1, determining the CSI feedback scheme based on the first performance indicator and the second performance indicator further comprises:
when a first number is greater than or equal to a preset first number, determining that the CSI feedback scheme is the second feedback scheme, wherein the first number is the number of cases, among the S first performance indicators and the S second performance indicators, that meet the first performance indicator being smaller than or equal to the second performance indicator; or
when a second number is greater than or equal to a preset second number, determining that the CSI feedback scheme is the first feedback scheme, wherein the second number is the number of cases, among the S first performance indicators and the S second performance indicators, that meet the first performance indicator being greater than or equal to the second performance indicator.

8. The method according to claim 1, wherein the first indication information comprises first CSI information or third CSI information, the first CSI information is CSI information when the CSI feedback is performed based on the codebook configuration information, and the third CSI information comprises CSI information output by the first CSI model,
wherein determining the CSI feedback scheme of the terminal device based on the first indication information comprises:
when the first indication information comprises the first CSI information, determining that the CSI feedback scheme is the first feedback scheme; or
when the first indication information comprises the third CSI information, determining that the CSI feedback scheme is the second feedback scheme.

9. The method according to claim 1, wherein the first indication information comprises a recommended feedback scheme of the terminal device,
wherein determining the CSI feedback scheme based on the first indication information comprises:
based on the recommended feedback scheme, determining the CSI feedback scheme, wherein the CSI feedback scheme is the recommended feedback scheme, or the CSI feedback scheme is a feedback scheme in the first feedback scheme and the second feedback scheme that is different from the recommended feedback scheme.

10. The method according to claim 1, wherein before receiving the first indication information sent from the terminal device, the method further comprises:
sending second indication information to the terminal device, wherein the second indication information is used to indicate target configuration information that is configured by the network device for the terminal device, and the target configuration information comprises at least the codebook configuration information.

11. The method according to claim 10, wherein sending the second indication information to the terminal device comprises:
receiving first request information sent from the terminal device, wherein the first request information is used to request information configuration for the terminal device; and
based on the first request information, sending the second indication information to the terminal device.

12. The method according to claim 10, wherein when a CSI feedback payload and/or an uplink transmission resource configured by the network device changes, sending the second indication information to the terminal device comprises:
based on a changed CSI feedback payload and/or uplink transmission resource, sending the second indication information to the terminal device.

13. The method according to any one of claims 10 to 12, wherein the target configuration information further comprises parameter configuration information, the parameter configuration information is used to determine the first CSI model, and the parameter configuration information comprises at least one of: a CSI feedback payload, an uplink transmission resource, the number of subbands, a carrier size, or the number of transmission ports for a reference signal.

14. The method according to claim 10, further comprising:
sending third indication information to the terminal device, wherein the third indication information is used to indicate to activate the first CSI model that is pre-deployed in the terminal device.

15. The method according to claim 14, wherein sending the third indication information to the terminal device comprises:
receiving second request information sent from the terminal device, wherein the second request information is used to request activation of the first CSI model; and
based on the second request information, sending the third indication information to the terminal device.

16. The method according to claim 15, wherein N CSI generation models are deployed in the terminal device, where N is a positive integer greater than 1, the first CSI model is a CSI generation model among the N CSI generation models that meets a preset first condition,
wherein the preset first condition comprises: a CSI generation model with the largest second performance indicator among second performance indicators respectively corresponding to M₁ CSI generation models, or a CSI generation model with the smallest absolute value of a difference between a CSI information payload output by the CSI generation model and a first feedback payload among abstract values of differences between CSI information payloads respectively output by N CSI generation models and the first feedback payload,
where M₁ is a positive integer smaller than or equal to N, the first feedback payload is a feedback payload when the CSI feedback is performed using the first feedback scheme, and the second performance indicator is a performance indicator when the CSI feedback is performed based on the CSI generation model.

17. The method according to claim 16, wherein when M₁ is smaller than N, the M₁ CSI generation models are CSI generation models selected from the N CSI generation models that match preset selection information, wherein the preset selection information comprises a channel environment between the terminal device and the network device, and/or parameter configuration information configured by the network device.

18. The method according to claim 17, wherein when multiple same CSI information payloads exist, the first CSI model is a CSI generation model, determined from CSI generation models corresponding to the multiple same CSI information payloads, that matches the preset selection information, wherein the preset selection information comprises the channel environment between the terminal device and the network device, and/or the parameter configuration information configured by the network device.

19. The method according to claim 15, wherein N two-sided models are deployed in the terminal device, the two-sided model comprises a CSI generation model and a CSI restoration model, N is a positive integer greater than 1, the first CSI model is a two-sided model among the N two-sided models that matches preset selection information, the preset selection information comprises an channel environment between the terminal device and the network device, and/or parameter configuration information configured by the network device.

20. The method according to claim 19, wherein when M₂ matching two-sided models exist, the first CSI model is a two-sided model with the largest second performance indicator among second performance indicators respectively corresponding to the M₂ two-sided models, M₂ is a positive integer smaller than or equal to N, and the second performance indicator is a performance indicator when the CSI feedback is performed using a two-sided model indicated by the second feedback scheme.

21. The method according to claim 15, wherein when a CSI generation model is deployed in the terminal device, the third indication information is further used to indicate that CSI information payload output by the CSI generation model is equal to a first feedback payload, or to indicate that an absolute value of a difference between the CSI information payload output by the CSI generation model and the first feedback payload is smaller than a preset first threshold, wherein the first feedback payload is a feedback payload when the CSI feedback is performed using the first feedback scheme.

22. The method according to claim 15, wherein when a CSI generation model is deployed in the terminal device and an uplink transmission resource of the terminal device is reduced, if the first indication information comprises first CSI information and third CSI information, the first CSI information is remaining CSI information after performing omission, based on a preset CSI omission criterion, on CSI information obtained when the CSI feedback is performed using the first feedback scheme, and the third CSI information is remaining CSI information after performing omission, based on a preset CSI omission criterion, on CSI information output by the CSI generation model.

23. The method according to any one of claims 16 to 18, wherein the first indication information comprises third CSI information or second performance indicators respectively corresponding to M₃ CSI generation models, wherein the third CSI information is CSI information output by a CSI restoration model deployed in the network device, the second performance indicator is a performance indicator when the CSI feedback is performed based on the CSI generation model, and M₃ is a positive integer smaller than or equal to N.

24. The method according to claim 19 or 20, wherein the first indication information comprises third CSI information or second performance indicators respectively corresponding to M₃ two-sided models, wherein M₃ is a positive integer smaller than or equal to N;
wherein if a CSI restoration model deployed in the terminal device is the same as a CSI restoration model deployed in the network device, the third CSI information is CSI information output by the CSI restoration model deployed in the network device, or the third CSI information is CSI information output by the CSI restoration model deployed in the terminal device;
wherein if the CSI restoration model deployed in the terminal device is different from the CSI restoration model deployed in the network device, the third CSI information is the CSI information output by the CSI restoration model deployed in the terminal device;
wherein the second performance indicator is a performance indicator when the CSI feedback is performed based on the two-sided model.

25. The method according to any one of claims 16 to 20, wherein when a CSI feedback payload and/or an uplink transmission resource configured by the network device changes, N being a positive integer greater than 1, the method further comprises:
sending fourth indication information to the terminal device, wherein the fourth indication information is used to indicate the terminal device to switch from the first CSI model to a second CSI model, and the second CSI model is a model deployed in the terminal device that matches the changed CSI feedback payload and/or the uplink transmission resource.

26. The method according to claim 25, wherein sending the fourth indication information to the terminal device comprises:
receiving third request information sent from the terminal device, wherein the third request information is sent from the terminal device when the terminal device monitors a change in the CSI feedback payload and/or the uplink transmission resource configured by the network device, and is used to request model switching for the first CSI model; and
based on the third request information, sending the fourth indication information to the terminal device.

27. The method according to claim 25, wherein sending the fourth indication information to the terminal device comprises:
when a change in the CSI feedback payload and/or the uplink transmission resource configured by the network device is monitored, sending the fourth indication information to the terminal device.

28. The method according to claim 1, further comprising:
sending fifth indication information to the terminal device, wherein the fifth indication information is used to indicate retraining of a two-sided model deployed between the terminal device and the network device, and the two-sided model comprises at least the first CSI model deployed in the terminal device.

29. The method according to claim 28, wherein sending the fifth indication information to the terminal device comprises:
sending the fifth indication information to the terminal device when at least one of the following information is monitored: a change in a channel environment between the terminal device and the network device, a change in a data distribution of a respective model of the two-sided model, or an absolute value of a difference between a first performance indicator and a second performance indicator being greater than a preset second threshold;
wherein the first performance indicator is a performance indicator when the CSI feedback is performed using the first feedback scheme, and the second performance indicator is a performance indicator when the CSI feedback is performed using the second feedback scheme.

30. The method according to claim 28, wherein sending the fifth indication information to the terminal device comprises:
receiving fourth request information sent from the terminal device, wherein the fourth request information is used to request retraining of the two-sided model deployed between the terminal device and the network device; and
based on the third request information, sending the fifth indication information to the terminal device.

31. The method according to any one of claims 1 to 5, further comprising:
sending sixth indication information to the terminal device, wherein the sixth indication information comprises the CSI feedback scheme to cause the terminal device to perform the CSI feedback based on the CSI feedback scheme.

32. A Channel Status Information (CSI) feedback determination method, comprising:
sending, by a terminal device, first indication information to a network device, wherein the first indication information is used for the network device to determine a CSI feedback scheme used by the terminal device when the terminal device performs CSI feedback to the network device, the CSI feedback scheme comprises a first feedback scheme and/or a second feedback scheme, the first feedback scheme is used to indicate the terminal device to perform the CSI feedback based on codebook configuration information configured by the network device, and the second feedback scheme is used to indicate the terminal device to perform the CSI feedback based on a pre-activated first CSI model.

33. The method according to claim 32, wherein the first indication information comprises first CSI information and second CSI information, the first CSI information is CSI information when the CSI feedback is performed based on the codebook configuration information, and the second CSI information is initial CSI information input to the first CSI model.

34. The method according to claim 32, wherein the first indication information comprises first CSI information, second CSI information and third CSI information, the first CSI information is CSI information when the CSI feedback is performed based on the codebook configuration information, the second CSI information is initial CSI information input to the first CSI model, and the third CSI information is CSI information output by the first CSI model.

35. The method according to claim 32, wherein the first indication information comprises a first performance indicator and a second performance indicator, the first performance indicator is a performance indicator when the CSI feedback is performed using the first feedback scheme, and the second performance indicator is a performance indicator when the CSI feedback is performed using the second feedback scheme.

36. The method according to claim 32, wherein the first indication information comprises first CSI information or third CSI information, the first CSI information is CSI information when the CSI feedback is performed based on the codebook configuration information, and the third CSI information is CSI information output by the first CSI model.

37. The method according to claim 32, wherein the first indication information comprises a recommended feedback scheme of the terminal device.

38. The method according to claim 32, further comprising:
receiving second indication information sent from the network device, wherein the second indication information is used to indicate target configuration information that is configured by the network device for the terminal device, and the target configuration information comprises at least the codebook configuration information.

39. The method according to claim 32, further comprising:
receiving third indication information sent from the network device, wherein the third indication information is used to indicate to activate the first CSI model which is pre-deployed in the terminal device; and
based on the third indication information, activating the first CSI model.

40. The method according to claim 39, wherein a CSI generation model is deployed in the terminal device, a length of CSI information output by the CSI generation model is within a preset first range, and the first CSI model is the CSI generation model.

41. The method according to claim 39, wherein N CSI generation models are deployed in the terminal device, where N is a positive integer greater than 1, a length of CSI information output by each of the CSI generation models is fixed or within a preset second range, and the first CSI model is a CSI generation model among the N CSI generation models that meets a preset first condition,
wherein the preset first condition comprises: a CSI generation model with the largest second performance indicator among second performance indicators respectively corresponding to M₁ CSI generation models, or a CSI generation model with the smallest absolute value of a difference between a CSI information payload output by the CSI generation model and a first feedback payload among abstract values of differences between CSI information payloads respectively output by N CSI generation models and the first feedback payload,
where M₁ is a positive integer smaller than or equal to N, the first feedback payload is a feedback payload when the CSI feedback is performed using the first feedback scheme, and the second performance indicator is a performance indicator when the CSI feedback is performed based on the CSI generation model.

42. The method according to claim 39, wherein a two-sided model is deployed in the terminal device, the two-sided model comprises a CSI generation model and a CSI restoration model, a length of CSI information output by the CSI generation model is within a preset first range, and the first CSI model is the two-sided model.

43. The method according to claim 39, wherein N two-sided models are deployed in the terminal device, the two-sided model comprises a CSI generation model and a CSI restoration model, where N is a positive integer greater than 1, a length of CSI information output by each of the CSI generation models is fixed or within a preset second range, the first CSI model is a two-sided model among the N two-sided models that matches preset selection information, the preset selection information comprises a channel environment between the terminal device and the network device, and/or parameter configuration information configured by the network device.

44. The method according to any one of claims 40 to 43, wherein when a CSI feedback payload and/or an uplink transmission resource configured by the network device changes, N being a positive integer greater than 1, the method further comprises:
receiving fourth indication information sent from the network device, wherein the fourth indication information is used to indicate the terminal device to switch from the first CSI model to a second CSI model, the second CSI model is a model deployed in the terminal device that matches the changed CSI feedback payload and/or the uplink transmission resource; and
based on the fourth indication information, switching from the first CSI model to the second CSI model.

45. The method according to claim 32, further comprising:
receiving fifth indication information sent from the network device, wherein the fifth indication information is used to indicate retraining of a two-sided model deployed between the terminal device and the network device, and the two-sided model comprises at least the first CSI model deployed in the terminal device; and
based on the fifth indication information, retraining the two-sided model deployed between the terminal device and the network device.

46. The method according to any one of claims 32 to 43, further comprising:
receiving sixth indication information sent from the network device, wherein the sixth indication information comprises the CSI feedback scheme; and
performing the CSI feedback based on the CSI feedback scheme in the sixth indication information.

47. The method according to claim 46, wherein the CSI feedback scheme is the second feedback scheme, and performing the CSI feedback based on the CSI feedback scheme in the sixth indication information comprises:
feeding CSI information output by the first CSI model in the terminal device back to the network device.

48. A network device, comprising:
a communication module configured to receive first indication information sent from a terminal device; and
a processing module configured to determine a CSI feedback scheme of the terminal device based on the first indication information, wherein the CSI feedback scheme comprises a first feedback scheme and/or a second feedback scheme, the first feedback scheme is used to indicate the terminal device to perform CSI feedback based on codebook configuration information configured by the network device, and the second feedback scheme is used to indicate the terminal device to perform the CSI feedback based on a pre-activated first CSI model.

49. A terminal device, comprising:
a communication module configured to send first indication information to a network device, wherein the first indication information is used for the network device to determine a CSI feedback scheme used by the terminal device when the terminal device performs CSI feedback to the network device, the CSI feedback scheme comprises a first feedback scheme and/or a second feedback scheme, the first feedback scheme is used to indicate the terminal device to perform the CSI feedback based on the codebook configuration information configured by the network device, and the second feedback scheme is used to indicate the terminal device to perform the CSI feedback based on a pre-activated first CSI model.

50. A communication apparatus, comprising:
a processor; and
a memory configured to store instructions executable by the processor;
wherein the processor is configured to perform steps of the method according to any one of claims 1 to 31, or the processor is configured to perform steps of the method according to any one of claims 32 to 47.

51. A computer-readable storage medium storing computer program instructions thereon, wherein when the computer program instructions are executed by a processor, steps of the method according to any one of claims 1 to 31 are implemented, or when the computer program instructions are executed by the processor, steps of the method according to any one of claims 32 to 47 are implemented.

52. A communication system, comprising:
a network device configured to perform the method according to any one of claims 1 to 31; and
a terminal device configured to perform the method according to any one of claims 32 to 47.
